(19) 

Europäisches
Patentamt

European
Patent Office

Office européen
des brevets

(11) **EP 4 422 252 A1**

(12) **EUROPEAN PATENT APPLICATION**
published in accordance with Art. 153(4) EPC

(43) Date of publication:
**28.08.2024 Bulletin 2024/35**

(21) Application number: **22894774.3**

(22) Date of filing: **15.11.2022**

(51) International Patent Classification (IPC):
**H04W 24/02** (2009.01)

(52) Cooperative Patent Classification (CPC):
**G06N 3/04; G06N 3/08; H04B 7/06; H04W 24/02**

(86) International application number:
**PCT/CN2022/131952**

(87) International publication number:
**WO 2023/088241 (25.05.2023 Gazette 2023/21)**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**KH MA MD TN**

(30) Priority: **16.11.2021 CN 202111357588**
**03.12.2021 CN 202111464756**

(71) Applicant: **Huawei Technologies Co., Ltd.
Shenzhen, Guangdong 518129 (CN)**

(72) Inventors:
- **WANG, Sihai
  Shenzhen, Guangdong 518129 (CN)**
- **QIN, Cheng
  Shenzhen, Guangdong 518129 (CN)**
- **YANG, Rui
  Shenzhen, Guangdong 518129 (CN)**

(74) Representative: **Gill Jennings & Every LLP
The Broadgate Tower
20 Primrose Street
London EC2A 2ES (GB)**

(54) **ARTIFICIAL INTELLIGENCE (AI) COMMUNICATION METHOD AND APPARATUS**

(57) This application provides an artificial intelligence AI communication method, applied to any two devices that perform communication in a communication system. The method includes: A first device receives AI model information sent by a second device, where the AI model information includes M groups of AI model complexity information corresponding to M AI models, each of the M groups of AI model complexity information is time and/or energy consumption of executing one of the M AI models in each of N reference AI execution environments, and M and N are positive integers; and the first device sends feedback information to the second device. In this way, the first device can evaluate, based on the AI model information sent by the second device, matching between an AI capability of the first device and an AI model, so that simplicity, efficiency, and accuracy of an evaluation result of the first device can be improved.

```
┌─────────────────┐                    ┌─────────────────┐
│ Terminal device │                    │ Network device  │
└─────────────────┘                    └─────────────────┘
        │                                       │
        │                            ┌──────────────────────┐
        │                            │ S301: Obtain AI model │
        │                            │      information      │
        │                            └──────────────────────┘
        │          S302: Send the AI model      │
        │◄───── information to the terminal device ──────│
        │                                       │
        │        S303: Send feedback information │
        │─────────── to the network device ────────►│
        │                                       │
        │        S304: Send configuration       │
        │◄─── information to the terminal device ────│
        │                                       │
```

FIG. 3

EP 4 422 252 A1

# Description

This application claims priority to Chinese Patent Application No. 202111357588.2, filed with the China National Intellectual Property Administration on November 16, 2021 and entitled "AI CAPABILITY REPRESENTATION METHOD AND APPARATUS", and claims priority to Chinese Patent Application No. 202111464756.8, filed with the China National Intellectual Property Administration on December 3, 2021 and entitled "ARTIFICIAL INTELLIGENCE AI COMMUNICATION METHOD AND APPARATUS", both of which are incorporated herein by reference in their entireties.

## TECHNICAL FIELD

This application relates to the field of communication technologies, and in particular, to an artificial intelligence AI communication method and apparatus.

## BACKGROUND

An artificial intelligence (artificial intelligence, AI) technology is a branch of computer science, runs through a historical process of computer development, and is an important development direction of the information technology industry. With development of communication technologies, more applications are intelligentized through AI. Currently, the AI technology is introduced into a wireless communication system, and an AI module may be gradually used to replace a function module in the wireless communication system. After the AI technology is introduced into the wireless communication system, a possible working mode is that a network device sends an AI model to a terminal device, and the terminal device receives the AI model from the network device and uses the AI model to perform wireless communication.

AI capabilities of different terminal devices are different. Therefore, the AI model delivered by the network device may fail to be executed by the terminal device. Consequently, the AI model cannot be used to perform wireless communication.

## SUMMARY

This application provides an artificial intelligence AI communication method and apparatus, to better apply an AI technology to a wireless communication system.

According to a first aspect, this application provides an AI communication method. The method may be performed by a first device, and the first device may be a terminal device or a receiver of an AI model in a communication system. The method may be implemented by using the following steps: The first device receives AI model information sent by a second device, where the AI model information includes M groups of AI model complexity information corresponding to M AI models, each of the M groups of AI model complexity information is time and/or energy consumption of executing one of the M AI models in each of N reference AI execution environments, and M and N are positive integers; and the first device sends feedback information to the second device.

In this implementation, the second device sends the AI model information to the first device, so that the first device can evaluate matching between an AI model and an AI capability of the first device, to ensure feasibility of communication between the first device and the second device by using the AI model.

In a possible design, the feedback information is response information of the AI model information.

In a possible design, the feedback information is used to request the second device to enable an AI communication mode; or the feedback information includes an evaluation result of at least one of the M AI models; or the feedback information is used to request to obtain at least one of the M AI models.

In a possible design, after the first device sends the feedback information to the second device, the first device receives configuration information sent by the second device, where the configuration information indicates the first device to enable the AI communication mode, or the configuration information indicates at least one of the M AI models, or the configuration information indicates a configuration parameter of at least one of the M AI models, or the configuration information indicates a method for obtaining at least one of the M AI models.

In a possible design, the at least one AI model includes a first AI model, and an evaluation result of the first AI model includes whether the first AI model matches the first device, or an evaluation result of the first AI model includes expected time and/or energy consumption of executing of the first AI model by the first device.

In a possible design, before the first device receives the AI model information sent by the second device, the first device sends request information to the second device, where the request information is used to request the second device to send the AI model information to the first device.

In a possible design, the M AI models include the first AI model, the N reference AI execution environments include a first reference AI execution environment, time of executing the first AI model in the first reference AI execution environment is a first time value, a first time level, or a first time range, and energy consumption of executing the first AI model in the first reference execution environment is a first energy consumption value, a first energy consumption level, or a first energy consumption range.

In a possible design, the M AI models include the first AI model, the M groups of AI model complexity information include a first group of AI model complexity information corresponding to the first AI model, and the first group of AI model complexity information includes one or more of the following: an amount of input data used when the first AI model is executed in each of the N reference AI execution environments; numerical precision of the input data used when the first AI model is executed in each of the N reference AI execution environments; numerical precision of a weight of the first AI model; and operation precision of the first AI model obtained when the first AI model is executed in each of the N reference AI execution environments.

In a possible design, the AI model information includes an upper limit of time used by the first device to execute each of the M AI models.

According to a second aspect, this application provides an AI communication method. The method may be performed by a second device, and the second device may be a network device or a sender of an AI model in a communication system. The method may be implemented by using the following steps: The second device obtains AI model information, where the AI model information includes M groups of AI model complexity information corresponding to M AI models, each of the M groups of AI model complexity information is time and/or energy consumption of executing one of the M AI models in each of N reference AI execution environments, and M and N are positive integers; and the second device sends the AI model information to a first device.

In a possible design, after the second device sends the AI model information to the first device, the second device receives feedback information sent by the first device, where the feedback information requests the second device to enable an AI communication mode, or the feedback information includes an evaluation result of at least one of the M AI models, or the feedback information requests to obtain at least one of the M AI models.

In a possible design, the feedback information is response information of the AI model information.

In a possible design, after the second device receives the feedback information sent by the first device, the second device sends configuration information to the first device, where the configuration information indicates the first device to enable the AI communication mode, or the configuration information indicates at least one of the M AI models, or the configuration information indicates a configuration parameter of at least one of the M AI models, or the configuration information indicates a method for obtaining at least one of the M AI models.

In a possible design, the at least one AI model includes a first AI model, and an evaluation result of the first AI model includes whether the first AI model matches the first device, or an evaluation result of the first AI model includes expected time and/or energy consumption of executing of the first AI model by the first device.

In a possible design, before the second device sends the AI model information to the first device, the second device receives request information sent by the first device, where the request information is used to request the second device to send the AI model information to the first device.

In a possible design, that the second device sends the AI model information to a first device includes: The second device periodically sends the AI model information to the first device; or when the first device accesses a network in which the second device is located, the second device sends the AI model information to the first device; or when the first device establishes a communication connection to the second device, the second device sends the AI model information to the first device; or when structures or computing amounts of the M AI models change, the second device sends the AI model information to the first device.

In a possible design, the M AI models include the first AI model, the N reference AI execution environments include a first reference AI execution environment, time of executing the first AI model in the first reference AI execution environment is a first time value, a first time level, or a first time range, and energy consumption of executing the first AI model in the first reference execution environment is a first energy consumption value, a first energy consumption level, or a first energy consumption range.

In a possible design, the M AI models include the first AI model, the M groups of AI model complexity information include a first group of AI model complexity information corresponding to the first AI model, and the first group of AI model complexity information includes one or more of the following: an amount of input data used when the first AI model is executed in each of the N reference AI execution environments; numerical precision of the input data used when the first AI model is executed in each of the N reference AI execution environments; numerical precision of a weight of the first AI model; and operation precision of the first AI model obtained when the first AI model is executed in each of the N reference AI execution environments.

In a possible design, the AI model information includes an upper limit of time used by the first device to execute each of the M AI models.

For beneficial effects of the second aspect and the possible designs of the second aspect, refer to the related description of the first aspect. Details are not described herein again.

According to a third aspect, this application provides an AI communication method. The method may be performed by a first device, and the first device may be a terminal device or a receiver of an AI model in a communication system. The method may be implemented by using the following steps: The first device obtains AI capability information, where the AI capability information includes a similarity between the first device and each of at least one reference AI execution environment; and the first device sends the AI capability information to a second device.

In this implementation, the first device sends the AI capability information to the second device, so that the second device can evaluate matching between an AI model and an AI capability of the first device, to ensure feasibility of communication between the first device and the second device by using the AI model.

In a possible design, after the first device sends the AI capability information to the second device, the first device receives configuration information sent by the second device, where the configuration information indicates the first device to enable an AI communication mode, or the configuration information indicates at least one AI model, or the configuration information indicates a configuration parameter of at least one AI model, or the configuration information indicates a method for obtaining at least one AI model.

In a possible design, the configuration information is response information of the AI capability information.

In a possible design, before the first device sends the AI capability information to the second device, the first device receives request information from the second device, where the request information is used to request the first device to send the AI capability information to the second device.

In a possible design, that the first device sends the AI capability information to a second device includes: The first device periodically sends the AI capability information to the second device; or when the first device accesses a network in which the second device is located, the first device sends the AI capability information to the second device; or when the first device establishes a communication connection to the second device, the first device sends the AI capability information to the second device; or when a computing resource used by the first device to execute the AI model changes, the first device sends the AI capability information to the second device.

In a possible design, similarity information includes a computing power similarity and/or an energy consumption similarity between the first device and each of the at least one reference AI execution environment.

In a possible design, the AI capability information includes one or more of the following: an upper limit of time used by the first device to execute the AI model; an upper limit of energy consumption used by the first device to execute the AI model; and resource usage used by the first device to execute the AI model.

According to a fourth aspect, this application provides an AI communication method. The method may be performed by a second device, and the second device may be a network device or a sender of an AI model in a communication system. The method may be implemented by using the following steps: The second device receives AI capability information sent by a first device, where the AI capability information includes a similarity between the first device and each of at least one reference AI execution environment.

In a possible design, after the second device receives the AI capability information sent by the first device, the second device sends configuration information to the first device, where the configuration information indicates the first device to enable an AI communication mode, or the configuration information indicates at least one AI model, or the configuration information indicates a configuration parameter of at least one AI model, or the configuration information indicates a method for obtaining at least one AI model.

In a possible design, when the configuration information indicates at least one AI model, or the configuration information indicates a configuration parameter of at least one AI model, or the configuration information indicates a method for obtaining at least one AI model, before the second device sends the configuration information to the first device, the second device further determines the at least one AI model based on the AI capability information.

In a possible design, the configuration information is response information of the AI capability information.

In a possible design, before the second device receives the AI capability information sent by the first device, the second device sends request information to the first device, where the request information is used to request the first device to send the AI capability information to the second device.

In a possible design, similarity information includes a computing power similarity and/or an energy consumption similarity between the first device and each of the at least one reference AI execution environment.

In a possible design, the AI capability information includes one or more of the following: an upper limit of time used by the first device to execute the AI model; an upper limit of energy consumption used by the first device to execute the AI model; and resource usage used by the first device to execute the AI model.

For beneficial effects of the fourth aspect and the possible designs of the fourth aspect, refer to the related description of the third aspect. Details are not described herein again.

According to a fifth aspect, this application further provides a communication apparatus. The communication apparatus may be a terminal device, or the communication apparatus may be a receive end device in a communication system. The communication apparatus implements functions of the first device according to any one of the first aspect or the third aspect. The function may be implemented by hardware, or may be implemented by hardware executing corresponding software. The hardware or the software includes one or more modules corresponding to the foregoing function.

In a possible design, a structure of the communication apparatus includes a transceiver unit and a processing unit. These units may perform corresponding functions of the first device according to any one of the first aspect or the third aspect. For details, refer to detailed descriptions in the method examples. Details are not described herein again.

In a possible design, a structure of the communication apparatus includes a transceiver and a processor, and optionally, further includes a memory. The transceiver is configured to receive and send data, and is configured to communicate and interact with another device in a communication system. The processor is configured to support the communication apparatus in performing corresponding functions of the first device according to any one of the first aspect or the third aspect. The memory is coupled to the processor, and stores program instructions and data that are necessary for the communication apparatus.

According to a sixth aspect, this application further provides a communication apparatus. The communication apparatus may be a network device, or the communication apparatus may be a transmit end device in a communication system. The communication apparatus implements functions of the second device according to any one of the second aspect or the fourth aspect. The function may be implemented by hardware, or may be implemented by hardware executing corresponding software. The hardware or the software includes one or more modules corresponding to the foregoing function.

In a possible design, a structure of the communication apparatus includes a transceiver unit and a processing unit. These units may perform corresponding functions of the second device according to any one of the second aspect or the fourth aspect. For details, refer to detailed descriptions in the method examples. Details are not described herein again.

In a possible design, a structure of the communication apparatus includes a transceiver and a processor, and optionally, further includes a memory. The transceiver is configured to receive and send data, and is configured to communicate and interact with another device in a communication system. The processor is configured to support the communication apparatus in performing corresponding functions of the second device according to any one of the second aspect or the fourth aspect. The memory is coupled to the processor, and stores program instructions and data that are necessary for the communication apparatus.

According to a seventh aspect, an embodiment of this application provides a communication system, which may include the first device and the second device mentioned above.

According to an eighth aspect, an embodiment of this application provides a computer-readable storage medium, where the computer-readable storage medium stores program instructions, and when the program instructions are run on a computer, the computer is enabled to perform the method according to any one of the first aspect to the fourth aspect or the possible implementations of the first aspect to the fourth aspect. For example, the computer-readable storage medium may be any usable medium accessible to the computer. The following provides an example but does not impose a limitation. The computer-readable medium may include a non-transient computer-readable medium, a random access memory (random access memory, RAM), a read-only memory (read-only memory, ROM), an electrically erasable programmable read-only memory (electrically EPROM, EEPROM), a CD-ROM or another optical disc storage, a magnetic disk storage medium or another magnetic storage device, or any other medium that can be used to carry or store expected program code in a form of instructions or a data structure and can be accessed by the computer.

According to a ninth aspect, an embodiment of this application provides a computer program product that includes computer program code or instructions. When the computer program product runs on a computer, the computer is enabled to implement the method according to any one of the first aspect to the fourth aspect or the possible implementations of the first aspect to the fourth aspect.

According to a tenth aspect, this application further provides a chip, including a processor, where the processor is coupled to a memory, and is configured to read and execute program instructions stored in the memory, so that the chip implements the method according to any one of the first aspect to the fourth aspect or the possible implementations of the first aspect to the fourth aspect.

For each aspect of the fifth aspect to the tenth aspect and technical effects that may be achieved by each aspect, refer to descriptions of technical effects that may be achieved by each possible solution in the first aspect to the fourth aspect. Details are not described herein again.

## BRIEF DESCRIPTION OF DRAWINGS

FIG. 1 is a schematic diagram of an architecture of a communication system according to this application;

FIG. 2 is a schematic diagram of a process in which a network device and a terminal device perform wireless communication by using an AI model according to an embodiment of this application;

FIG. 3 is a schematic flowchart 1 of an AI communication method according to an embodiment of this application;

FIG. 4 is a schematic flowchart 1 in which a terminal device evaluates a matching degree between an AI capability and an AI model according to an embodiment of this application;

FIG. 5A and FIG. 5B are a schematic diagram of AI execution environment similarity definition according to an embodiment of this application;

FIG. 6 is a schematic flowchart 2 of an AI communication method according to an embodiment of this application;

FIG. 7 is a schematic flowchart in which a network device evaluates a matching degree between an AI capability and an AI model according to an embodiment of this application;

FIG. 8 is a schematic flowchart 2 in which a terminal device evaluates a matching degree between an AI capability and an AI model according to an embodiment of this application;

FIG. 9A and FIG. 9B are a schematic diagram of AI model similarity definition according to an embodiment of this application;

FIG. 10 is a diagram of an architecture of a reference AI execution environment list and a schematic flowchart of maintenance and synchronization of the reference AI execution environment list according to an embodiment of this application;

FIG. 11 is a schematic flowchart of maintenance and synchronization of a reference AI execution environment list according to an embodiment of this application;

FIG. 12 is a schematic diagram 1 of a structure of a communication apparatus according to an embodiment of this application; and

FIG. 13 is a schematic diagram 2 of a structure of a communication apparatus according to an embodiment of this application.

## DESCRIPTION OF EMBODIMENTS

The following further describes the technical solutions in this application in detail with reference to the accompanying drawings.

The technical solutions provided in this application may be applied to various communication systems, for example, a fifth generation (5th generation, 5G) or new radio (new radio, NR) system, a long term evolution (long term evolution, LTE) system, an LTE frequency division duplex (frequency division duplex, FDD) system, and an LTE time division duplex (time division duplex, TDD) system. The technical solutions provided in this application are also applied to a future communication system, for example, a 6th generation mobile communication system. The technical solutions provided in this application may be further applied to device-to-device (device to device, D2D) communication, vehicle-to-everything (vehicle-to-everything, V2X) communication, machine-to-machine (machine to machine, M2M) communication, machine type communication (machine type communication, MTC), an internet of things (internet of things, IoT) communication system, or another communication system.

Embodiments of this application provide an artificial intelligence AI communication method and apparatus. The method and the apparatus in this application are based on a same technical concept. Because problem-resolving principles of the method and the apparatus are similar, mutual reference may be made to implementations of the apparatus and the method, and repeated parts are not described.

In the descriptions of this application, terms such as "first" and "second" are only for distinction and description, but cannot be understood as indicating or implying relative importance, or as indicating or implying a sequence.

In the descriptions in this application, "at least one (type)" refers to one or more (types), and "a plurality of (types)" refers to two or more than two (types).

In the descriptions of this application, unless otherwise specified, "/" means "or", for example, A/B may mean "A or B"; "and/or" used herein is only used to describe an association relationship between associated objects, and indicates that three relationships may exist. For example, "A and/or B" may indicate the following: Only A exists, both A and B exist, and only B exists. In addition, in the descriptions of embodiments of this application, "a plurality of" means two or more. To describe the technical solutions in embodiments of this application more clearly, the following describes in detail, with reference to the accompanying drawings, the downlink scheduling method and the apparatus provided in embodiments of this application.

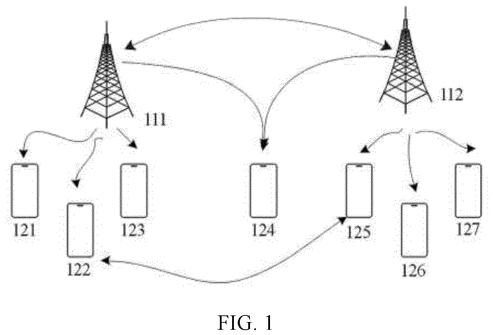

FIG. 1 is a schematic diagram of a wireless communication system applicable to embodiments of this application. As shown in FIG. 1, the wireless communication system may include at least one network device, for example, a network device 111 and a network device 112 shown in FIG. 1, and the wireless communication system may further include at least one terminal device, for example, a terminal device 121, a terminal device 122, a terminal device 123, a terminal device 124, a terminal device 125, a terminal device 126, and a terminal device 127 shown in FIG. 1. A plurality of antennas may be configured for both the network device and the terminal device, and the network device and the terminal device may communicate with each other by using a multi-antenna technology.

When the network device communicates with the terminal device, the network device may manage one or more cells, and one cell may have an integer quantity of terminal devices. It should be noted that, a cell may be understood as a region within coverage of a wireless signal of a network device.

This application may be used in a scenario in which a network device communicates with a terminal device. For example, the network device 111 may communicate with the terminal device 121, the terminal device 122, and the terminal device 123. For another example, the network device 111 and the network device 112 may communicate with the terminal device 124. This application may be further used in a scenario in which a terminal device communicates with another terminal device. For example, the terminal device 122 may communicate with the terminal device 125. This application may be further used in a scenario in which a network device communicates with another network device. For example, the network device 111 may communicate with the network device 112.

It should be understood that FIG. 1 is merely a simplified schematic diagram of an example for ease of understanding. This application is not limited thereto. Embodiments of this application may be applicable to any communication scenario in which a transmit end device communicates with a receive end device.

The terminal device in embodiments of this application may also be referred to as user equipment (user equipment, UE), an access terminal, a subscriber unit, a subscriber station, a mobile station, a remote station, a remote terminal, a mobile device, a user terminal, a terminal, a wireless communication device, a user agent, or a user apparatus.

The terminal device may be a device that provides voice/data for a user, for example, a handheld device having a wireless connection function or a vehicle-mounted device. Currently, some examples of the terminal are a mobile phone (mobile phone), a tablet computer, a notebook computer, a palmtop computer, a mobile internet device (mobile internet device, MID), a wearable device, a virtual reality (virtual reality, VR) device, an augmented reality (augmented reality, AR) device, a wireless terminal in industrial control (industrial control), a wireless terminal in self-driving (self-driving), a wireless terminal in remote medical surgery (remote medical surgery), a wireless terminal in a smart grid (smart grid), a wireless terminal in transportation safety (transportation safety), a wireless terminal in a smart city (smart city), a wireless terminal in a smart home (smart home), a cellular phone, a cordless phone, a session initiation protocol (session initiation protocol, SIP) phone, a wireless local loop (wireless local loop, WLL) station, a personal digital assistant (personal digital assistant, PDA), a handheld device having a wireless communication function, a computing device or another processing device connected to a wireless modem, a wearable device, a terminal device in a 5G network, or a terminal device in a future evolved public land mobile communication network (public land mobile network, PLMN). This is not limited in embodiments of this application.

As an example instead of a limitation, in embodiments of this application, the terminal device may alternatively be a wearable device. The wearable device may also be referred to as a wearable intelligent device, and is a general term of a wearable device that is intelligently designed and developed for daily wear by using a wearable technology, for example, glasses, gloves, a watch, clothing, and shoes. The wearable device is a portable device that is directly worn on a body or integrated into clothes or an accessory of a user. The wearable device is not merely a hardware device, but is used to implement a powerful function through software support, data exchange, and cloud interaction. In a broad sense, intelligent wearable devices include full-featured and large-size devices that can implement complete or partial functions without depending on smartphones, for example, smart watches or smart glasses, and devices that dedicated to only one type of application and need to be used together with other devices such as smartphones, such as various smart bands or smart jewelry used for monitoring physical signs.

In embodiments of this application, an apparatus configured to implement functions of the terminal device may be a terminal device, or may be an apparatus, for example, a chip system or a ship, that can support the terminal device in implementing the function. The apparatus may be mounted in the terminal device. In embodiments of this application, the chip system may include a chip, or may include a chip and another discrete component.

The network device in embodiments of this application may be a device configured to communicate with a terminal device. The network device may also be referred to as an access network device or a radio access network device. For example, the network device may be a base station. The network device in embodiments of this application may be a radio access network (radio access network, RAN) node (or device) that connects a terminal device to a wireless network. The base station may cover following various names in a broad sense, or may be replaced with the following names, for example, a NodeB (NodeB), an evolved NodeB (evolved NodeB, eNB), a next generation NodeB (next generation NodeB, gNB), a relay station, an access point, a transmission and reception point (transmission and reception point, TRP), a transmission point (transmission point, TP), a master station, a secondary station, a multi-standard radio (multi-standard radio, MSR) node, a home base station, a network controller, an access node, a wireless node, an access point (AP), a transmission node, a transceiver node, a baseband unit (BBU), a remote radio unit (remote radio unit, RRU), an active antenna unit (active antenna unit, AAU), a remote radio head (remote radio head, RRH), a central unit (central unit, CU), a distributed unit (distributed unit, DU), or a positioning node. The base station may be a macro base station, a micro base station, a relay node, a donor node, an analogue, or a combination thereof. The base station may alternatively be a communication module, a modem, or a chip that is disposed in the foregoing device or apparatus. The base station may alternatively be a mobile switching center, a device that bears a base station function in D2D, V2X, and M2M communication, a network side device in a 6G network, a device that bears a base station function in a future communication system, or the like. The base station may support networks of a same access technology or different access technologies. A specific technology and a specific device form that are used by the network device are not limited in embodiments of this application.

The base station may be fixed or mobile. For example, a helicopter or an uncrewed aerial vehicle may be configured as a mobile base station, and one or more cells may move based on a location of the mobile base station. In other examples, a helicopter or an uncrewed aerial vehicle may be configured as a device for communicating with another base station.

In some deployments, the network device mentioned in embodiments of this application may be a CU, or a DU, or a device including a CU and a DU, or a device including a control plane CU node (a central unit-control plane (central unit-control plane, CU-CP)), a user plane CU node (a central unit-user plane (central unit-user plane, CU-UP)), and a DU node.

The network device and the terminal device may be deployed on the land, including an indoor device, an outdoor device, a handheld device, or a vehicle-mounted device; may be deployed on the water; or may be deployed on an airplane, a balloon, and a satellite in the air. Scenarios in which the network device and the terminal device are located are not limited in embodiment of this application.

Artificial intelligence AI technologies can be combined with wireless air interfaces to improve wireless network performance. An example is AI-based channel evaluation and signal detection. The signal detection may be a process of extracting a received signal including interference noise from a wireless channel. The channel evaluation is a process of evaluating a model parameter of an assumed channel model from a received signal. Another example is an AI-based end-to-end communication link design. Another example is an AI-based channel state information (channel state information, CSI) feedback solution. To be specific, CSI is encoded by using a neural network, and the CSI is fed back to a network device.

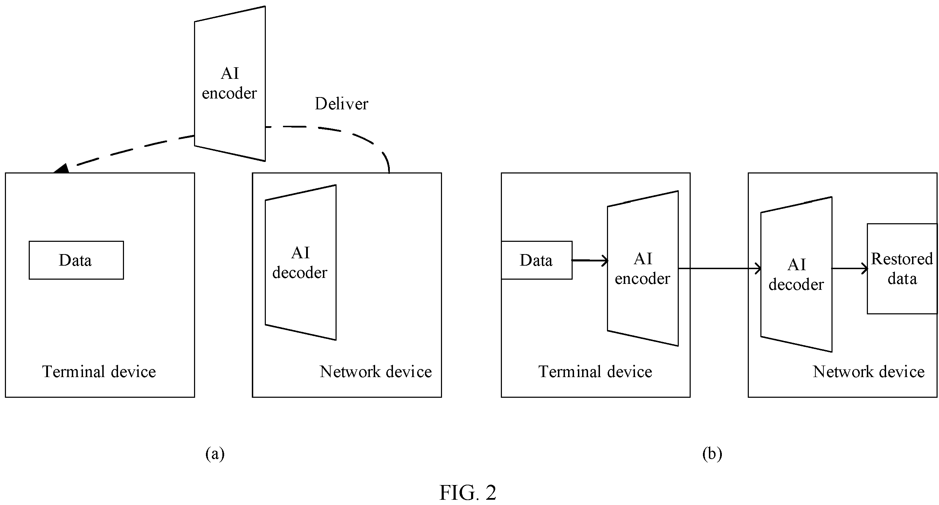

The AI-based channel state information (channel state information, CSI) feedback solution is used as an example to describe a process in which a network device and a terminal device perform wireless communication by using an AI model. As shown in (a) in FIG. 2, an AI encoder and a corresponding AI decoder may be deployed in the network device. The network device may send or deliver the AI encoder to the terminal device, or indicate the terminal device to obtain the AI encoder, so that the terminal device subsequently performs CSI encoding by using the AI encoder. As shown in (b) in FIG. 2, the terminal device may encode the CSI by using the AI encoder, and send encoded information to the network device. Then, the network device may decode the information encoded by the terminal device by using the AI decoder, to obtain restored information. It should be noted that the AI encoder may alternatively be understood as an AI model used for information encoding, and the AI decoder may alternatively be understood as an AI model used for information decoding.

There are various AI models. Different AI models can be used in different application scenarios. Generally, an AI model may be implemented based on a neural network (neural network) model. The neural network model is a mathematical computing model that imitates a behavior feature of a human brain neural network and performs distributed parallel information processing. Some complex neural network models may include a large quantity of parameters or a large amount of computing, but a capability (for example, a computing capability, a storage capability, or energy) of the terminal device may be limited. Therefore, before performing AI communication between the network device and the terminal device, it needs to be ensured that an AI capability of the terminal device can support execution (or referred to as running and processing) of the AI model sent by the network device. For example, a storage capability of the terminal device can accommodate the AI model, a computing capability of the terminal device can support the AI model to complete computing within required time, and operating power consumption (or referred to as energy power consumption) of executing the AI model by the terminal device falls within an expected acceptable range.

Generally, an upper limit of computing delay $t_i$ of the AI model (namely, an upper limit of AI model inference completion time) is known. Therefore, in a solution, matching between the AI model and the AI capability of the terminal device may be evaluated by comparing the computing capability $C_{UE}$ of the terminal device with computing complexity $C_M$ of the AI model. When $C_M/C_{UE} + t_{th} \leq t_i$, it indicates that the AI model can complete computing within a required delay, that is, the AI model complexity matches the computing capability of the terminal device. Otherwise, it is considered that the AI model complexity does not match the computing capability of the terminal device. The computing capability $C_{UE}$ of the terminal device may be in a unit of floating-point operations per second (floating-point operations per second, FLOPS), the computing complexity $C_M$ of the AI model may be in a unit of floating-point operations (floating-point operations, FLOP), and $t_{th}$ is a margin that can be configured in advance.

However, internal structures of AI models for a same purpose may vary greatly. In actual computing, computing efficiency of AI models of different structures may vary greatly due to different hardware computing rates, data scheduling delays, and the like. In addition, because a large amount of software conversion and optimization is required between an AI model and a hardware computing resource, different software conversion and optimization methods also bring different computing efficiency. In addition, different AI computing hardware implementations of the terminal device may also bring different AI model computing efficiency. Therefore, factors such as an AI model structure design, software environment, and a hardware implementation may lead to a hundreds-fold difference in computing efficiency, and it may be difficult to evaluate actual matching between the AI model and the AI capability of the terminal device only by configuring the margin $t_{th}$. For example, if a value of $t_{th}$ is too large, computing power resources may be wasted; or if a value of $t_{th}$ is too small, execution of the AI model may fail to be completed within the upper limit of delay limit. In addition, the value of $t_{th}$ may be different when the AI model structure, the software environment, and the hardware implementation are different.

In another solution, terminal hardware information, for example, a simulator of a terminal device, may be configured on a matching server. After obtaining detailed information about an AI model and a computing delay, the matching server may obtain an accurate evaluation result of matching between AI model complexity and an AI capability of the terminal device. However, in this solution, the matching server and a corresponding interaction protocol need to be introduced. Therefore, a network structure and an interaction procedure are complex, and costs and an evaluation delay are increased.

Based on this, this application provides an AI communication method and apparatus, to evaluate matching between AI model complexity and an AI capability of a device, and ensure feasibility of performing a communication service by using an AI model.

It should be noted that this application may be applied to a scenario in which any two devices (a first device and a second device) in a communication system communicate with each other. The first device may have an execution (computing) environment for executing the AI model, and is ready to obtain the AI model from the second device and use the AI model. An AI capability of the first device may indicate the execution environment, for example, may include a computing power, a storage capability, or an energy support capability of the first device. The second device may have the AI model, and is ready to send the AI model to the first device for use. For example, the first device is the terminal device 121, the terminal device 122, or the terminal device 123 in FIG. 1, and the second device is the network device 111 in FIG. 1. For another example, the first device is the terminal device 122 in FIG. 1, and the second device is the terminal device 125 in FIG. 1. For another example, the first device is the network device 111 in FIG. 1, and the second device is the network device 112 in FIG. 1.

In embodiments shown below, interaction between a network device and a terminal device is used as an example to describe in detail the method provided in embodiments of this application, for ease of understanding and description.

The method and related apparatus provided in embodiments of this application are described below in detail with reference to the accompanying drawings. It should be noted that a presentation sequence of embodiments of this application merely represents a sequence of the embodiments, but does not represent superiority or inferiority of the technical solutions provided in the embodiments.

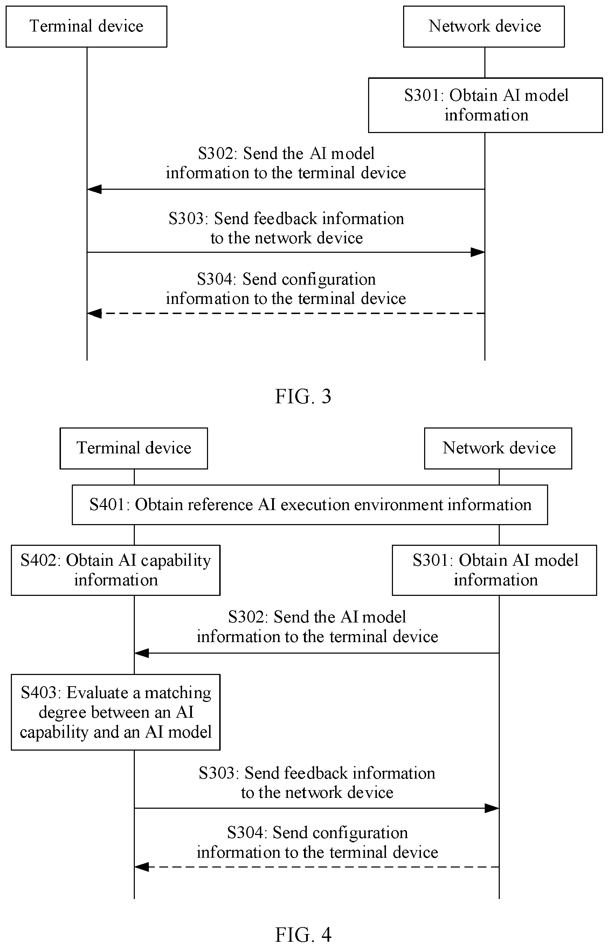

Based on the foregoing descriptions, embodiments of this application provide an AI communication method, which is applicable to the communication system shown in FIG. 1. As shown in FIG. 3, the method may include but is not limited to the following steps.

S301: A network device obtains AI model information. The AI model information may indicate complexity information of each of M AI models.

For example, the AI model information includes M groups of AI model complexity information corresponding to the M AI models. Each of the M groups of AI model complexity information is time (or referred to as time consumption) and/or energy consumption of executing one of the M AI models in each of N reference AI execution environments, and M and N are positive integers.

For example, when M=3 and N=5, the AI model complexity information includes three groups of AI model complexity information (a first group of AI model complexity information, a second group of AI model complexity information, and a third group of AI model complexity information) corresponding to three AI models (P1, P2, and P3). The first group of AI model complexity information is time and/or energy consumption of executing the AI model P1 in five reference AI execution environments, the second group of AI model complexity information is time and/or energy consumption of executing the AI model P2 in the five reference AI execution environments, and the third group of AI model complexity information is time and/or energy consumption of executing the AI model P3 in the five reference AI execution environments.

Specifically, the reference AI execution environment may be standardized in advance or formulated offline, and is disclosed to the network device and a terminal device.

Executing the AI model in the reference AI execution environment may be replaced with a description that the AI model is executed in the reference AI execution environment. Executing the AI model in the reference AI execution environment may alternatively be understood as that the AI model performs an inference or training operation in the reference AI execution environment. For example, the AI model may be a neural network model. A common neural network model includes a ResNet series, a MobileNet series, a Transformer series, and the like.

Optionally, the time and/or energy consumption of executing the AI model in the AI execution environment may be expressed by using an actual value, an approximate value, a level (for example, low/medium/high, or 1/2/3/4), or a range. Specifically, the M AI models may include a first AI model, the N reference AI execution environments may include a first reference AI execution environment, time of executing the first AI model in the first reference AI execution environment may be a first time value, a first time level, or a first time range, and energy consumption of executing the first AI model in the first reference AI execution environment may be a first energy consumption value, a first energy consumption level, or a first energy consumption range.

In a possible implementation, the network device may independently execute the M AI models in the reference AI environment, and obtain the AI model information through local computing. Optionally, the M AI models may be prestored by the network device, or the M AI models may be obtained by the network device from a third-party device, or the M AI models may be generated by the network device. In another possible implementation, the network device may obtain the AI model information from a third-party device or a network device server. Optionally, the network device does not need to obtain the M AI models. In still another possible implementation, the network device may be configured to obtain the AI model information during delivery or software upgrade. Optionally, the network device does not need to obtain the M AI models.

S302: The network device sends the AI model information to the terminal device. Correspondingly, the terminal device receives the AI model information sent by the network device.

Optionally, the AI model information sent by the network device may include an amount of input data used by the network device (or the third-party device, or the simulator, or the network device server) to execute the M AI models in each of the N reference AI execution environments. Optionally, the AI model information sent by the network device may alternatively include an amount of input data used for executing each of the M AI models in each reference AI execution environment. The amount of input data may also be referred to as a quantity of samples. Generally, during model training, a batch (batch) of samples is executed at a time. A size of the batch of samples determines a quantity of samples for one training. Different computing efficiency is obtained when different amounts of input data are used.

The neural network may include a neuron. The neuron may be an operation unit that uses $x_s$ and an intercept of 1 as input data. An output of the operation unit may be as follows:

$$h_{W,b}(x) = f(W^T x) = f(\sum_{s=1}^{n} W_s x_s + b)$$

, where s=1, 2, ..., n, n is a natural number, $W_s$ is a weight of $x_s$, and b is an offset of the neuron (which may also be considered as a weight). Numerical precision of the input data and the weight affects the computing efficiency of the terminal device. The numerical precision may be, for example, int8 (8-bit integer), int16 (16-bit integer), float16 (16-bit floating point), or the like. The numerical precision may alternatively be equivalently represented as multiplication and addition operation precision. The operation precision also affects the computing efficiency of the terminal device. The operation precision may be, for example, int8, int16, float16, or the like.

Optionally, the AI model complexity information sent by the network device may further include at least one of the following: numerical precision of the input data used by the network device (or the third-party device, or the simulator, or the network device server) to execute the M AI models in each of the N reference AI execution environments; numerical precision of a weight (or referred to as a weight value or a coefficient) of each of the M AI models; a total computing amount of each of the M AI models; a total quantity of layers of each of the M AI models; and operation precision of executing, by the network device (or the third-party device, or the simulator, or the network device server), the M AI models in each of the N reference AI execution environments.

For example, the M AI models may include the first AI model P1, the M groups of AI model complexity information include the first group of AI model complexity information corresponding to the first AI model P1, and the first group of AI model complexity information includes one or more of the following: an amount of input data used when the first AI model is executed in each of the N reference AI execution environments; numerical precision of the input data used when the first AI model is executed in each of the N reference AI execution environments; numerical precision of a weight of the first AI model; and operation precision of the first AI model obtained when the first AI model is executed in each of the N reference AI execution environments.

Time budget information for executing the AI model varies in different application scenarios. Further, the AI model information may further include an upper limit of time the network device expects (or wants or requires) the terminal device to take to complete execution of the AI model, namely, a period of time within which the terminal device needs to complete execution of the AI model. It may be understood that the upper limit of time is also referred to as an upper time limit, maximum time, or a maximum time requirement.

In an implementation, the AI model information includes an upper limit of time for executing each of the M AI models by the terminal device. In other words, the network device separately configures the upper time limit for each AI model. In another implementation, at least one of the M AI models may use (or share) a same upper limit of time. In other words, the network device configures the same upper limit of time for the at least one of the M AI models. Optionally, the M AI models may use a same upper limit of time. In this case, the network device needs to configure only one upper limit of time.

It should be noted that information included in the AI model information may be included in same signaling, or may be included in different signaling.

When the information included in the AI model information is in same signaling, the network device may send the AI model information to the terminal device at a time. For example, the network device sends first information to the terminal device, where the first information may include or indicate the AI model information, or the first information is the AI model information.

When the information included in the AI model information is in different signaling, the network device may send the AI model information to the network device at one or more times. Specifically, the following may be included.

Example 1: The network device sends different complexity information such as time and/or energy consumption for executing the AI model in the reference AI execution environment, an amount of input data, and precision of the input data to the terminal device at one or more times. For example, the network device sends the first information to the terminal device, where the first information includes or indicates the time and/or energy consumption for executing the AI model in the reference AI execution environment. The network device sends second information to the terminal device, where the second information includes or indicates the amount of input data used for executing the AI model in the reference AI execution environment. The AI model information may include the first information and the second information.

Example 2: The network device sends the AI model information to the terminal device at one or more times. For example, the network device sends first information to the terminal device, where the first information includes or indicates complexity information such as time and/or energy consumption for executing the AI model in the reference AI execution environment, an amount of input data, and precision of the input data. The network device sends second information to the terminal device, where the second information includes or indicates updated complexity information. The AI model information may include the first information and the second information.

S303: The terminal device sends feedback information to the network device. Correspondingly, the network device receives the feedback information sent by the terminal device. In an embodiment, the feedback information is response information of the AI model information.

For example, the feedback information may meet one or more of the following: The feedback information may be used to request the network device to enable an AI communication mode; or the feedback information may include or indicate an evaluation result of at least one of the M AI models; or the feedback information may be used to request to obtain at least one of the M AI models.

For example, the at least one AI model may include the first AI model, and an evaluation result of the first AI model may include or indicate whether the first AI model matches he AI capability of the terminal device, or an evaluation result of the first AI model may include or indicate expected time and/or energy consumption of executing the first AI model by the terminal device. Optionally, when the first AI model does not match the AI capability of the terminal device, the evaluation result of the first AI model may include a reason why the AI model does not match the AI capability, and the like.

In an implementation, as shown in FIG. 3, after step S303, that is, after the terminal device sends the feedback information to the network device, the method further includes the following steps.

S304: The network device sends configuration information to the terminal device. Correspondingly, the terminal device receives the configuration information sent by the network device. In an embodiment, the configuration information is response information of the feedback information.

Specifically, the configuration information may meet one or more of the following: The configuration information may indicate the terminal device to enable the AI communication mode. Further, AI communication may be performed between the terminal device and the network device. Alternatively, the configuration information may indicate at least one of the M AI models. Further, AI communication may be performed between the terminal device and the network device by using the at least one AI model. Alternatively, the configuration information may indicate a configuration parameter of at least one of the M AI models. Alternatively, the configuration information may indicate a method for obtaining at least one of the M AI models. For example, the configuration information may indicate a download address or an obtaining address of the at least one AI model. The at least one AI model is determined based on the feedback information.

When the configuration information indicates the method for obtaining the at least one AI model, specifically, the network device may indicate the download address or the obtaining address of the at least one AI model. As described above, the M AI models may be prestored in another device (for example, a third device). In this case, the network device may indicate the terminal device to obtain the at least one AI model from the third device.

It may be understood that, after receiving the feedback information sent by the terminal device, the network device may alternatively make no response.

In an implementation, specific triggering manners in which the network device sends the AI model information to the terminal device may include the following manners.

Manner 1: Before step S302, that is, before the network device sends the AI model information to the terminal device, the method further includes: The terminal device sends request information (or referred to as query information) to the network device, where the request information is used to request the network device to send the AI model information to the terminal device.

Manner 2: The network device periodically sends the AI model information to the terminal device. Alternatively, the network device sends the AI model information to the terminal device based on a predefined time interval or predefined specific time.

Manner 3: When the terminal device accesses a network in which the network device is located, the network device sends the AI model information to the terminal device. "When the terminal device accesses the network in which the network device is located" may alternatively be described as "after the terminal device accesses the network in which the network device is located", or "within specific time after the terminal device accesses the network in which the network device is located". In addition, that the terminal device accesses the network in which the network device is located may alternatively be understood as that the terminal device establishes a communication connection to the network device.

Manner 4: When a structure or a computing amount of the AI model changes, the network device sends the AI model information to the terminal device. In an implementation, when a structure or a computing amount of at least one of the M AI models changes, the network device may send, to the terminal device, the AI model complexity information corresponding to the M AI models. In another implementation, when structures or computing amounts of M1 AI models in the M AI models change, the network device may send, to the terminal device, AI model complexity information corresponding to the M1 AI models, where M1 is a positive integer not greater than M. The network device sends only changed AI model complexity information to the terminal device, so that signaling overheads can be reduced. Similarly, "when a structure or a computing amount of the AI model changes" may alternatively be described as "after a structure or a computing amount of the AI model changes", or "within specific time after a structure or a computing amount of the AI model changes". Details are not described herein again.

In the foregoing implementations, after the network device sends the M groups of AI model complexity information corresponding to the M AI models to the terminal device, the terminal device may evaluate and determine matching between the M AI models and the AI capability of the terminal device, so that simplicity, efficiency, and accuracy of an evaluation result can be improved, and AI communication can be better performed.

In the foregoing embodiments, before step S303, that is, before the terminal device sends the feedback information to the network device, the method further includes: The terminal device determines the feedback information based on the AI model information received in step S302. The following describes, by using specific embodiments, an example of a method for determining feedback information by a terminal device by evaluating M AI models and an AI capability of the terminal device.

FIG. 4 is an example of a flowchart of a method in which a terminal device evaluates a matching degree between an AI capability and an AI model. As shown in FIG. 4, before a network device obtains AI model information, optionally, in step S401, the network device and the terminal device may obtain reference AI execution environment information.

As described above, the reference AI execution environment information may be standardized in advance or formulated offline, and is disclosed to the network device and the terminal device.

For example, the reference AI execution environment information may be standardized in advance or formulated offline with reference to a reference AI execution environment list (or table). The reference AI execution environment list may include names, numbers, or indexes of K reference AI execution environments, and description parameters of the K reference AI execution environments. The description parameter of the reference AI execution environment may include a hardware environment (for example, a CPU type, a CPU dominant frequency, a mainboard model, a memory, or a specific model of an entire hardware system), a software environment (for example, an operating system or a deep learning framework), a model format, and the like. The reference AI execution environment list may be disclosed to the network device and the terminal device in advance. Specifically, in step S301, the N reference AI execution environments for executing the M AI models may be N reference AI execution environments in the K reference AI execution environments, where K is a positive integer, and N is a positive integer not greater than K.

It may be understood that in step S301, when the network device does not obtain the AI model information through local computing, the network device may not need to obtain the reference AI execution environment information. In other words, the network device may not perform step S401.

S402: The terminal device obtains AI capability information of the terminal device.

It may be understood that the terminal device is also an AI execution environment. The AI capability information of the terminal device may be represented or defined by using a similarity between the terminal device and the reference AI execution environment. Optionally, the AI capability information of the terminal device may be similarity information between the terminal device and the reference AI execution environment. The similarity information includes a computing power similarity and/or an energy consumption similarity. Each type of similarity information further includes two indicators: a capability ratio and an efficiency similarity. For example, the computing power similarity includes a computing power ratio and a computing efficiency similarity. The energy consumption similarity includes an energy consumption ratio and an energy consumption efficiency similarity.

In an implementation, the terminal device may obtain the similarity information through local computing. In another implementation, a process of calculating the similarity information may alternatively be completed in a device whose AI capability is the same as or similar to that of the terminal device, a simulator that can truly reflect the AI capability of the terminal device, or a terminal device server. Specifically, an error of a computing result obtained in a device or a simulator whose AI capability is the same as or similar to that of the terminal device may not exceed an expected value. In this case, the terminal device may obtain the AI capability information from the device, the simulator, or the terminal device server. In still another implementation, the similarity between the terminal device and the at least one reference AI execution environment may be configured before delivery. It may be understood that, in step S402, when the terminal device does not obtain the similarity information (that is, the AI capability information) through local computing, the terminal device may not need to obtain the reference AI execution environment information. In other words, the terminal device may not perform step S401.

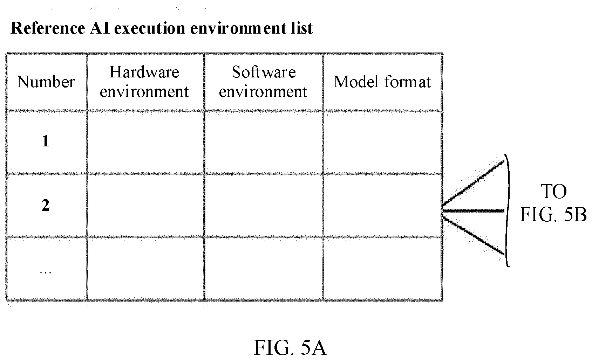

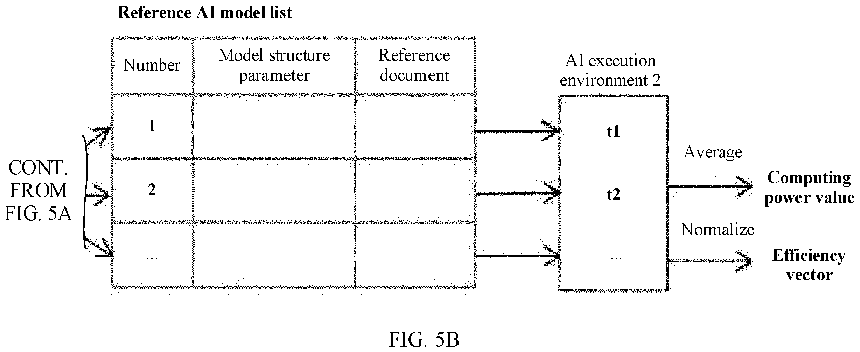

For a specific AI execution environment, a computing power characteristic and/or an energy consumption characteristic of the AI execution environment may include a capability value and an efficiency vector. The computing power characteristic is used as an example. As shown in FIG. 5A and FIG. 5B, an AI execution environment 2 in the reference AI execution environment list is used as an example. A computing method for the computing power characteristic is as follows: First, a reference AI model list is formulated. L1 reference AI models in the reference AI model list may be executed (or trained and inferred) in the AI execution environment 2 one by one, to obtain execution time vectors including L1 execution completion time corresponding to the L1 reference AI models. A capability value C of the computing power (a computing power value) of the AI execution environment 2 may be obtained by averaging the vectors, and an efficiency vector $\vec{E}$ of the computing power of the AI execution environment 2 may be obtained by performing normalization processing on the vectors. Optionally, data processing may be performed on the execution time vectors before or after the computing power value is obtained through averaging and/or the efficiency vector is obtained through normalization. For example, each execution time in the execution time vectors may be divided by a total computing amount of a reference AI model corresponding to the execution time before the computing power value is obtained through averaging and/or the efficiency vector is obtained through normalization.

For example, the reference AI model list may be standardized in advance or formulated offline, or may be formulated and mastered only by the terminal device. The reference AI model list may include names, numbers, or indexes of L reference AI models, and structure description parameters of the L reference AI models. The structure description parameters of the L reference AI models may alternatively be provided by referring to a reference document or a link. Based on the reference AI model list, the network device and the terminal device may uniformly understand the network structures of the L reference AI models. Optionally, a specific weight coefficient value (weight value) of each AI model may not be defined, may be predefined, or may be a random number. Specifically, the L1 reference AI models executed in the AI execution environment 2 may be L1 reference AI models in the L reference AI models, where L is a positive integer, and L1 is a positive integer not greater than L.

According to the foregoing method, computing power characteristic information of the terminal device and the reference AI execution environment may be obtained. Further, computing power similarity information between the AI execution environments may be obtained by using the computing power ratio r and the computing efficiency similarity s between the AI execution environments. Specifically, in a possible implementation method, a computing power ratio between any two AI execution environments is r = C1/C2 and an efficiency similarity between any two AI execution environments is

$$s = \mathrm{norm}\left[sim\left(\overrightarrow{E1}, \overrightarrow{E2}\right)\right]$$

, where C1 and C2 are respectively computing power values of the two AI execution environments, $\overrightarrow{E1}$ and $\overrightarrow{E2}$ are efficiency vectors of computing power of the two AI execution environments, sim is a similarity function between two vectors, for example, a cosine similarity function, a Euclidean distance computing function, or a standardized Euclidean distance function, and norm is a [0, 1] normalization computing function, that is, an input value of the normalization computing function is normalized to a range of [0, 1]. For example, if sim is used for cosine similarity computing and a result value range is [-1, 1], the normalization function

$$\mathrm{norm}(x) = \frac{x+1}{2}$$

. In this process, necessary data processing may also be performed as required.

In the foregoing method, the computing power similarity between the AI execution environments is defined by referring to the execution completion time of the AI model in the AI execution environment. Similarly, the energy consumption similarity between the AI execution environments may also be defined by referring to the energy consumption of executing the AI model in the AI execution environment. Details are not described herein again.

S403: The terminal device evaluates a matching degree between the AI capability and the AI model.

After step S302, that is, after the network device sends the AI model information to the terminal device, the terminal device may evaluate, based on the AI model information received in step S302 and the AI capability information (that is, the similarity information between the terminal device and the reference AI execution environment) of the terminal device obtained in step S402, matching between the AI capability of the terminal device and the M AI models, that is, expected performance of executing the M AI models in the terminal device, such as completion time, and energy consumption.

For example, when N=3, that is, when there are three reference AI execution environments, similarity information between the terminal device and the three reference AI execution environments may be obtained by using the method in step S402. Computing power ratios between the terminal device and the three reference AI execution environments are r1, r2, and r3 respectively, which may alternatively be represented as r(i), where i=1/2/3. Similarities of computing efficiency between the terminal device and the three reference AI execution environments are s1, s2, and s3 respectively, which may alternatively be represented as s(i), where i=1/2/3. In step S302, the terminal device obtains time of executing the M AI models in the three reference AI execution environments. A first AI model in the M AI models is used as an example. The terminal device may obtain time of executing the first AI model in the three reference AI execution environments, which are respectively t1, t2, and t3, and may alternatively be represented as t(i), where i=1/2/3. Further, the terminal device may obtain, by using the following two computing methods, expected completion time of executing the first AI model in the terminal device.

Computing method 1: weighted averaging. Specifically, the expected completion time of the first AI model in the terminal device is $(t1*s1*r1+t2*s2*r2+t3*s3*r3)/(s1+s2+s3)+\Delta t$, where $\Delta t$ is a time margin. Alternatively, the expected completion time of the first AI model in the terminal device is $(t1*s1*r1+t2*s2*r2+t3*s3*r3)*(1+\Delta x)/(s1+s2+s3)$, where $\Delta x$ is a margin proportion.

Computing method 2: optimal selection. Specifically, $i=\text{argmax}(s(1), s(2), s(3))$, and the expected completion time is $t(i)*r(i)+\Delta t$, where $\Delta t$ is a time margin. Alternatively, the expected completion time is $t(i)*r(i)*(1+\Delta x)$, where $\Delta x$ is a margin proportion. Optionally, both $\Delta t$ and $\Delta x$ may be related to $s(i)$, for example, $\Delta t$ and/or $\Delta x$ is a constant divided by $s(i)$, that is, a smaller $s(i)$ indicates a larger margin of $\Delta t$ and $\Delta x$.

In addition, in the foregoing computing process, if the AI capability information of the terminal device is obtained based on all AI computing resources of the terminal device, and the terminal device can use only a part of the AI computing resources to execute the first AI model, corresponding conversion further needs to be performed. A possible conversion method is to divide the expected completion time obtained through computing in step S403 by a proportion of the part of AI computing resources to all AI computing resources, to obtain converted expected completion time.

According to the foregoing method, the terminal device may obtain the expected completion time of executing the M AI models in the terminal device. Similarly, the terminal device may further obtain expected energy consumption of executing the M AI models in the terminal device.

It should be understood that the foregoing description is an example of a method in which the terminal device evaluates the matching degree between the AI capability and the AI model. In some other embodiments, the terminal device may alternatively perform evaluation by using another method. This is not limited in this application.

Based on the expected completion time and/or the expected energy consumption of the M AI models that are obtained through the foregoing evaluation, and the upper limit of time used for executing the AI model that is sent by the network device and/or the upper limit of energy consumption used for executing the AI model that is locally determined by the terminal device, the terminal device may determine whether the M AI models match the AI capability of the terminal device. For example, if the expected completion time of the first AI model in the M models does not exceed a time budget requirement of the terminal device, and/or the expected energy consumption does not exceed an energy consumption limit of the terminal device, the terminal device may determine that the first AI model matches the AI capability of the terminal device. The time budget requirement of the terminal device may be time budget information that is sent by the network device and that is used by the terminal device to execute the AI model, or may be a local time budget requirement of the terminal device. The energy consumption limit of the terminal device may be a local energy consumption limit of the terminal device.

Further, the terminal device may send the feedback information to the network device. For example, in step S303, the feedback information may indicate at least one AI model. Specifically, the terminal device may select at least one AI model from models that match the AI capability of the terminal device, and apply, based on the feedback information, for the network device to send the AI model. A rule for selecting the AI model by the terminal device may be shortest expected completion time, least expected energy consumption, or a random rule.

It should be noted that in the embodiment shown in FIG. 4, for specific implementation processes of steps S301, S302, S303, and S304, refer to related descriptions in the embodiment shown in FIG. 3. Details are not described herein again.

In the foregoing embodiment, after the network device transfers complexity of a to-be-delivered AI model to the terminal device, the terminal device can evaluate matching between the to-be-delivered AI model and the AI capability of the terminal device more conveniently, efficiently, and accurately, and further determine whether to request to start the AI model or request to deliver the AI model. This can improve accuracy and efficiency of evaluating, by the terminal device, the matching degree between the AI capability and the AI model.

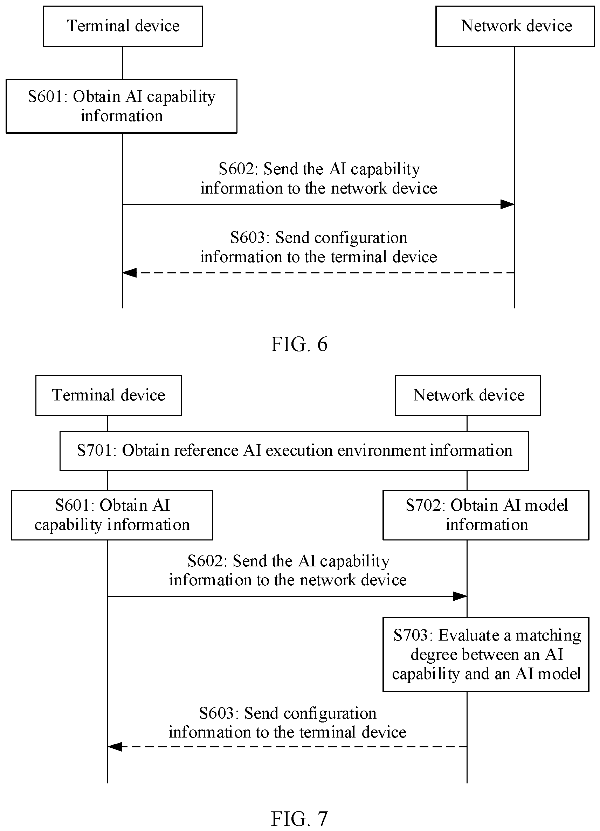

Embodiments of this application further provide an AI communication method, which is applicable to the communication system shown in FIG. 1. As shown in FIG. 6, the method may include but is not limited to the following steps.

S601: A terminal device obtains AI capability information, where the AI capability information includes similarity information between the terminal device and each of at least one reference AI execution environment.

For example, when a quantity of the at least one reference AI execution environment is 3 (refer to an AI execution environment 1, an AI execution environment 2, and an AI execution environment 3), the AI capability information includes: similarity information between the terminal device and the reference AI execution environment 1, similarity information between the terminal device and the reference AI execution environment 2, and similarity information between the terminal device and the reference AI execution environment 3.

For example, reference AI execution environment information may be standardized in advance or formulated offline, and is disclosed to a network device and the terminal device. For example, the at least one reference AI execution environment may be in a reference AI execution environment list. For specific content of the reference AI execution environment list, refer to the foregoing descriptions.

Specifically, the similarity information between the terminal device and the reference AI execution environment includes a computing power similarity and/or an energy consumption similarity. Each type of similarity information further includes two indicators: a capability ratio and an efficiency similarity. For example, the computing power similarity includes a computing power ratio and a computing efficiency similarity. The energy consumption similarity includes an energy consumption ratio and an energy consumption efficiency similarity. For a specific example of calculating the similarity information between the terminal device and the reference AI execution environment, refer to related descriptions in step S402 shown in FIG. 4. Details are not described herein again.

Optionally, the similarity between the terminal device and the at least one reference AI execution environment may be represented by using an actual value, an approximate value, a level, or a range. For example, the similarity between the terminal device and the reference AI execution environment 1 is a first similarity value, a first similarity level, or a first similarity range.

In an implementation, the terminal device may obtain the similarity information through local computing. In another implementation, a process of calculating the similarity information may alternatively be completed in a device whose AI capability is the same as or similar to that of the terminal device, a simulator that can truly reflect the AI capability of the terminal device, or a terminal device server. Specifically, an error of a computing result obtained in a device or a simulator whose AI capability is the same as or similar to that of the terminal device may not exceed an expected value. In this case, the terminal device may obtain the AI capability information from the another device, the simulator, or the terminal device server. In still another implementation, the similarity between the terminal device and the at least one reference AI execution environment may be configured before delivery.

S602: The terminal device sends the AI capability information to the network device. Correspondingly, the network device receives the AI capability information sent by the terminal device.

In an implementation, as shown in FIG. 6, after step S602, that is, after the terminal device sends the AI capability information to the network device, the method further includes the following steps.

S603: The network device sends configuration information to the terminal device. Correspondingly, the terminal device receives the configuration information sent by the network device. In an embodiment, the configuration information is response information of the AI capability information.

Specifically, the configuration information may meet one or more of the following: The configuration information may indicate the terminal device to enable an AI mode. Further, AI communication may be performed between the terminal device and the network device. Alternatively, the configuration information may indicate at least one AI model. Further, AI communication may be performed between the terminal device and the network device by using the at least one AI model. Alternatively, the configuration information may indicate a configuration parameter of the at least one AI model. Alternatively, the configuration information may indicate a method for obtaining at least one AI model. For example, the configuration information may indicate a download address or an obtaining address of the at least one AI model. The at least one AI model is determined based on the AI capability information.

It may be understood that, after receiving the AI capability information sent by the terminal device, the network device may alternatively make no response.

In an implementation, specific triggering manners in which the terminal device sends the AI capability information to the network device may include the following manners.

Manner 1: The network device sends request information (or referred to as indication information) to the terminal device. Correspondingly, the terminal device receives the request information sent by the network device. The request information is used to request the terminal device to send (or report) the AI capability information to the network device.

Manner 2: The terminal device periodically sends the AI capability information to the network device. Alternatively, the terminal device sends the AI capability information to the network device based on a predefined time interval or predefined specific time.

Manner 3: When the terminal device accesses a network in which the network device is located, the terminal device sends the AI capability information to the network device. "When the terminal device accesses the network in which the network device is located" may alternatively be described as "after the terminal device accesses the network in which the network device is located", or "within specific time after the terminal device accesses the network in which the network device is located". In addition, that the terminal device accesses the network in which the network device is located may alternatively be understood as that the terminal device establishes a communication connection to the network device.

Manner 4: When a computing resource that can be used by the terminal device to execute the AI model changes (for example, increases or decreases), or a proportion of a computing resource that can be used by the terminal device to execute the AI model changes, the terminal device sends the AI capability information to the network device. Similarly, "when a computing resource that can be used by the terminal device to execute the AI model changes" may alternatively be described as "after a computing resource that can be used by the terminal device to execute the AI model changes", or "within specific time after a computing resource that can be used by the terminal device to execute the AI model changes". Details are not described herein again.

When the terminal device is in different application scenarios, complexity of operations that need to be completed varies, and a power consumption/energy requirement, a time requirement, a used resource requirement, and the like that can be accepted (or tolerated) by the terminal device for executing the AI model are also different. In other words, in different application scenarios, a maximum time requirement, a maximum energy consumption requirement, or a resource usage requirement of the terminal device for executing the AI model are different. The maximum time requirement may be a period of time within which the terminal device should complete executing the AI model. The maximum energy consumption requirement may be maximum energy that is allowed to be consumed by the terminal device after executing the AI model. The resource usage requirement may be a maximum proportion of a resource that is allowed to be used by the terminal device to execute the AI model to an available resource of the terminal device, or a hardware resource configuration that can be used by the terminal device to execute the AI model. It should be noted that the execution of the AI model by the terminal device refers to a process in which the terminal device executes the AI model in the AI communication mode. A type of the AI model executed by the terminal device is not limited.

Further, when the terminal device is in different application scenarios, the terminal device may send the AI capability information to the network device. The AI capability information may include at least one of an upper limit of time, an upper limit of energy consumption, and resource usage that are used by the terminal device to execute the AI model. It may be understood that the upper limit of time may be referred to as an upper time limit, maximum time, or a maximum time requirement. The upper limit of energy consumption may be referred to as an upper energy consumption limit, maximum energy consumption, or a maximum energy consumption requirement. The resource usage may be, for example, a hardware resource configuration or an upper limit of resource proportion that can be used by the terminal device. The upper limit of resource proportion is also referred to as an upper resource proportion limit, a maximum resource proportion, or a maximum resource proportion requirement. Optionally, before the terminal device sends the AI capability to the network device, the network device may further send query information to the terminal device, where the query information instructs the terminal device to report one or more of the upper limit of time, the upper limit of energy consumption, and the resource usage that are used to execute the AI model.

It should be understood that, when an application scenario of the terminal device changes, the terminal device may report, to the network device, at least one of the upper limit of time, the upper limit of energy consumption, or the resource usage information that is used by the terminal device to execute the AI model, to notify the network device of at least one of the time budget requirement, the energy consumption limit, and a resource proportion consumption limit for executing the AI model by the network device. In this case, information about the upper limit of time, information about the upper limit of energy consumption, or the resource usage information and the information reported in step S602 may be carried in different signaling.

In the foregoing implementation, the terminal device reports the AI capability information of the terminal device, so that the network device can evaluate, based on the AI capability information, matching between the AI capability of the terminal device and the AI model, and further determine whether to enable the AI communication mode or deliver an appropriate AI model, so that simplicity, efficiency, and accuracy of an evaluation result of the network device can be improved, and AI communication can be better performed.

In the foregoing embodiment, after the terminal device sends the AI capability information of the terminal device to the network device, the network device may evaluate matching between the AI capability of the terminal device and the AI model, and determine the configuration information.

FIG. 7 is an example of a flowchart of a method in which a network device evaluates a matching degree between an AI capability and an AI model. As shown in FIG. 7, before a terminal device obtains AI capability information, optionally, in step S701, the terminal device and the network device may obtain reference AI execution environment information.

Optionally, in step S601, when the terminal device does not obtain the similarity information (that is, the AI capability information) through local computing, the terminal device may not need to obtain the reference AI execution environment information. In other words, the terminal device may not perform step S701.

S702: After obtaining the reference AI execution environment information, the network device obtains AI model information, that is, AI model complexity information of M AI models, where M is a positive integer. For a specific implementation of obtaining, by the terminal device and the network device, the reference AI execution environment information in step S701, refer to the description in step S401 in the foregoing embodiment. For a specific implementation of obtaining, by the network device, the AI model complexity information of the M AI models in step S702, refer to descriptions in step S301 in the foregoing embodiment. Details are not described herein again.

Optionally, in step S702, when the network device does not obtain the AI model complexity information (that is, the AI model information) of the M AI models through local computing, the network device may not need to obtain the reference AI execution environment information. In other words, the network device may not perform step S701.

S703. The network device evaluates a matching degree between an AI capability of the terminal device and the AI model.

After step S602, that is, after the network device receives the AI capability information sent by the terminal device, the network device may evaluate matching between the AI capability of the terminal device and the M AI models based on the AI capability information received in step S602 and the AI model information obtained in step S702.

As described above, optionally, the M AI models may be prestored by the network device, or the M AI models may be obtained by the network device from a third-party device, or the M AI models may be generated by the network device. Alternatively, the network device does not care about specific structures or the like of the M AI models. The network device may obtain the AI model complexity information from a third-party device or a network device server, or the network device is configured with the AI model complexity information or obtains the AI model information during delivery or software upgrade.

Similar to the foregoing embodiment, the network device may obtain, through an evaluation of weighted average or optimal selection, expected completion time and/or expected power consumption of executing the M AI models in the terminal device. For example, when there are three reference AI execution environments, in step S602, the AI capability information sent by the terminal device to the network device includes: computing power ratios of the terminal device to the three reference AI execution environments, which are respectively r1, r2, and r3; and similarities of computing efficiency between the terminal device and the three reference AI execution environments, which are respectively s1, s2, and s3. In step S702, the network device may obtain time of executing each of the M AI models in the three reference AI execution environments. A first AI model in the M AI models is used as an example. The network device may obtain that time for executing the first AI model in the three reference AI execution environments is t1, t2, and t3 respectively. In step S703, when the weighted average method is used, the network device may evaluate that the expected completion time of executing the first AI model by the terminal device is (t1*s1*r1+t2*s2*r2+t3*s3*r3)/(s1+s2+s3)+ $\Delta$t or (t1*s1*r1+t2*s2*r2+t3*s3*r3)*(1+$\Delta$x)/(s1+s2+s3). When the optimal selection method is used, the network device may evaluate that the expected completion time of executing the first AI model by the terminal device is t(i)*r(i)+ $\Delta$t, or t(i)*r(i)*(1+$\Delta$x), where i=argmax(s(1), s(2), s(3)). For specific meanings of the parameters, refer to related descriptions in step S403 in the foregoing embodiment. Details are not described herein again. In addition, if the terminal device reports a resource usage proportion status (an upper limit of resource proportion) to the network device, corresponding conversion further needs to be performed. A possible conversion method is to divide the expected completion time obtained through computing in step S703 by the upper limit of resource proportion, to obtain converted expected completion time.

In addition, a method for evaluating, by the network device, the expected energy consumed when the terminal device executes the first AI model may also be obtained by using the foregoing method. Details are not described herein again.

Based on the expected completion time and/or the expected power consumption that are obtained through the foregoing evaluation, and the information about the upper limit of time and/or the information about the upper limit of energy consumption that are sent by the terminal device and that are used to execute the AI model, the network device may determine whether the M models match the AI capability of the terminal device. For example, if the expected completion time of the first AI model in the M models does not exceed a time budget requirement of the terminal device, and/or the expected energy consumption does not exceed an energy consumption limit of the terminal device, it may be determined that the first AI model matches the AI capability of the terminal device.

Further, as described in step S603, the network device may send configuration information to the terminal device.

In step S603, when the configuration information indicates at least one AI model, or the configuration information indicates a configuration parameter of at least one AI model, or the configuration information indicates a method for obtaining at least one AI model, before the network device sends the configuration information to the terminal device, the network device determines the at least one AI model based on the AI capability information. Specifically, in one case, the network device has only one AI model oriented to a current application. If the AI model matches the AI capability of the terminal device, the AI model is the AI model determined by the network device. In another case, the network device has a plurality of AI models oriented to a current application, and the network device may select at least one AI model from AI models that match the AI capability of the terminal device, and send or configure the AI model to the terminal device. A rule for selecting the AI model by the network device may be shortest expected completion time, least expected energy consumption, a smallest expected resource proportion, or a random rule. It may be understood that if the network device can determine the at least one AI model, it is considered that the network device may enable an AI mode.

It should be noted that in the embodiment shown in FIG. 7, for specific implementation processes of steps S601, S602, and S603, refer to related descriptions in the embodiment shown in FIG. 6. Details are not described herein again.

In the foregoing embodiment, the terminal device sends the similarity information between the terminal device and the reference AI execution environment as the AI capability information to the network device, so that the AI capability of the terminal device can be accurately represented, and the network device obtains a more accurate evaluation result, and further determines whether to enable AI communication or deliver an AI model. This improves the accuracy and efficiency of the evaluation.

In the embodiment shown in FIG. 3, the network device sends the AI model information to the terminal device. Further, the terminal device may evaluate the matching degree between the AI capability of the terminal device and the AI model. The complexity information of the M AI models sent by the network device is defined (or represented) by using time and/or energy consumption of executing the M AI models in the reference AI execution environment. It may be understood that the AI model complexity information may also be represented in another manner. The following specifically describes another AI model information representation method and an evaluation process performed by the terminal device.

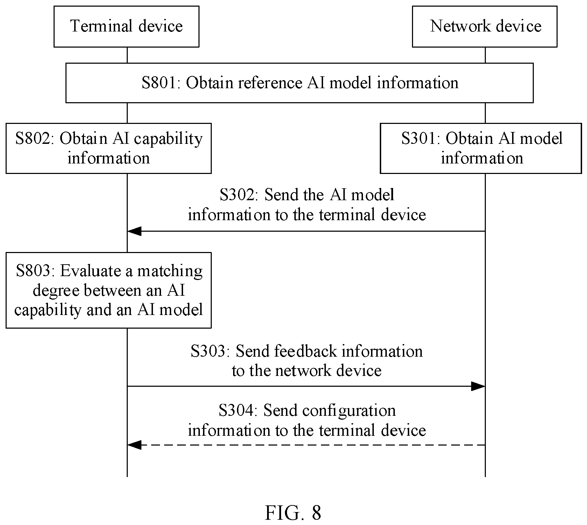

FIG. 8 is an example of a flowchart of another method in which a terminal device evaluates a matching degree between an AI capability and an AI model. As shown in FIG. 8, optionally, in step S801, the terminal device and a network device may obtain reference AI model information. Optionally, the terminal device and the network device may obtain the reference AI model information by referring to an AI model list. For example, the reference AI model list may be standardized in advance or formulated offline, and is disclosed to the terminal device and the network device in advance. The reference AI model list may include names, numbers, or indexes of U reference AI models, and structure description parameters of the U reference AI models. The structure description parameters of the U reference AI models may alternatively be provided by referring to a reference document or a link. Based on the reference AI model list, the network device and the terminal device may uniformly understand the network structures of the U reference AI models. Optionally, a specific weight coefficient value (weight value) of each AI model may not be defined, may be predefined, or may be a random number.

As shown in FIG. 3 and FIG. 8, in step S301, the network device obtains the AI model information. The AI model information may indicate complexity information of each of M AI models.

Optionally, in step S301, when the network device does not obtain the AI model information through local computing, the network device may not need to obtain the reference AI model information. In other words, the network device may not perform step S801.

For example, the complexity information of each of the M AI models may be represented by similarity data. For example, the AI model information indicates M groups of similarity information (or referred to as similarity data) corresponding to the M AI models. Each of the M groups of similarity information is similarity information between one of the M AI models and U1 reference AI models. The U1 reference AI models belong to the U reference AI models in the reference AI model list, where M and U are positive integers, and U1 is a positive integer not greater than U.

For example, when M=3 and U1=5, the AI model information includes three groups of similarity information (a first group of similarity information, a second group of similarity information, and a third group of similarity information) corresponding to three AI models (Q1, Q2, and Q3), where the first group of similarity information is similarity information between the AI model Q1 and five reference AI models, the second group of similarity information is similarity information between the AI model Q2 and the five reference AI models, the third group of similarity information is similarity information between the AI model Q3 and the five reference AI models.

Optionally, the similarity information between AI models may be similarity information of a computing amount and/or energy consumption. For example, computing amount similarity information between AI models may include a computing amount ratio cr and a computing efficiency similarity cs.

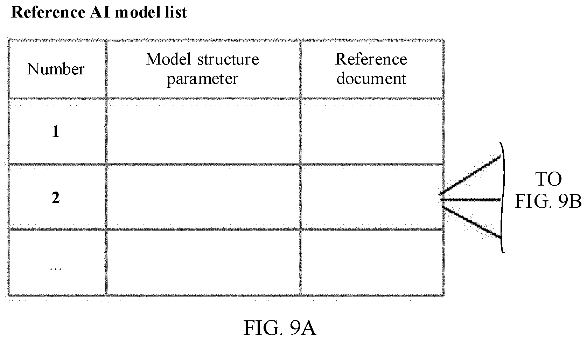

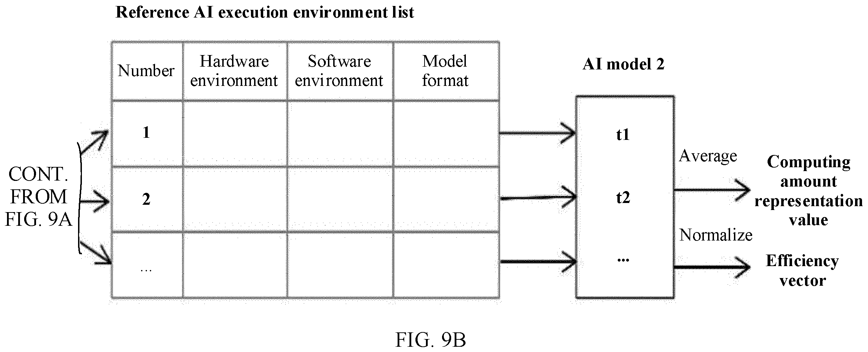

For a specific AI model, a computing amount characteristic of the AI model may include a computing amount representation value and a computing efficiency vector. As shown in FIG. 9A and FIG. 9B, a computing amount characteristic of an AI model 2 in the U reference AI models is used as an example. A computing method is as follows: First, a reference AI execution environment list is formulated, where the reference AI execution environment list may include V reference AI execution environments. The AI model 2 is sequentially executed (or trained and inferred) in V1 reference AI execution environments of the V reference AI execution environments, to obtain an execution time vector including V1 execution completion time corresponding to the AI model 2, where V is a positive integer, and V1 is a positive integer not greater than V A computing amount representation value CA of the AI model 2 may be obtained by averaging the vector, and a computing efficiency vector $\overrightarrow{EA}$ of the computing amount of the AI model 2 may be obtained by performing normalization processing on the vector. In this process, necessary data processing may be performed.

According to the foregoing method, computing amount characteristic information of the M AI models and the reference AI model may be obtained. Further, the computing amount similarity information between the AI models may be obtained by using the computing amount ratio cr and the computing efficiency similarity cs between the AI models. Specifically, a computing amount ratio between any two AI models is cr = $CA1/CA2$ and a computing efficiency similarity is

$$cs = \mathrm{norm}\left[sim\left(\overrightarrow{EA1}, \overrightarrow{EA2}\right)\right]$$

, where CA1 and CA2 are respectively computing amount representation values of the two AI models. $\overrightarrow{EA1}$ and $\overrightarrow{EA2}$ are computing efficiency vectors of the two AI models respectively. sim is a similarity function between two vectors, for example, a cosine similarity function, a Euclidean distance computing function, or a standardized Euclidean distance function. norm is a [0, 1] normalization computing function, that is, an input value of the normalization computing function is normalized to a range of [0, 1]. For example, if sim is used for cosine similarity computing and a result value range is [-1, 1], the normalization function

$$\mathrm{norm}(x) = \frac{x+1}{2}$$

. In this process, necessary data processing may also be performed as required.

In the foregoing method, a computing amount similarity between AI models is defined by using execution completion time of the AI models in a group of AI execution environments. Similarly, energy consumption of executing AI models in a group of AI execution environments may alternatively be used to define an energy consumption characteristic of the AI model, to define an energy consumption similarity between the AI models. Details are not described herein again.

Step S802: The terminal device obtains AI capability information of the terminal device.

Optionally, the AI capability information of the terminal device may be time and/or energy consumption of executing each of the U1 reference AI models in the terminal device.

Optionally, in step S802, when the terminal device does not obtain the AI capability information of the terminal device through local computing, the terminal device may not need to obtain the reference AI model information. In other words, the terminal device may not perform step S801.

In step S302, after the network device sends, to the terminal device, the AI model information represented by the AI model similarity information, in step S803 in the embodiment shown in FIG. 8, the terminal device may evaluate, based on the AI model information sent by the network device and the AI capability information of the terminal device obtained in step S802, matching between the AI capability of the terminal device and the M AI models, that is, expected performance of executing the M AI models in the terminal device, for example, completion time and energy consumption.

For example, when U1=3, that is, there are three reference AI models, it may be obtained in step S802 that the time of executing the three reference AI models in the terminal device is t1, t2, and t3 respectively. In step S302, the terminal device obtains similarity information between the M AI models and the three reference AI models. The AI model Q2 in the M AI models is used as an example. The terminal device may obtain similarity data between the AI model Q2 and the three reference AI models. Computing amount ratios between the AI model Q2 and the three reference AI models are cr1, cr2, and cr3 respectively, and computing efficiency similarities between the AI model Q2 and the three reference AI models are cs1, cs2, and cs3 respectively. Further, in step S803, the terminal device may obtain, by using the weighted average method and/or the optimal selection method, expected completion time of executing the AI model Q2 in the terminal device.

According to the foregoing method, the terminal device may obtain the expected completion time of executing the M AI models in the terminal device. Similarly, the terminal device may further obtain expected energy consumption of executing the M AI models in the terminal device.

Optionally, after the terminal device completes evaluation of the matching degree between the AI capability and the AI model, further, in S303, the terminal device may send the feedback information to the network device. In step S304, the network device may send the configuration information to the terminal device based on the feedback information sent by the terminal device. For specific implementations of steps S301, S302, S303, and S304, refer to related descriptions in the embodiment shown in FIG. 3. Details are not described again in this application.

In this embodiment, complexity information of a to-be-delivered AI model is defined by using a similarity between the to-be-delivered AI model and the reference AI model, so that the terminal device can evaluate matching between the to-be-delivered AI model and the AI capability of the terminal device more easily, efficiently, and accurately, and further determine whether to request to start the AI model or request to deliver the AI model. This can improve accuracy and efficiency of evaluating, by the terminal device, the matching degree between the AI capability and the AI model.

In the embodiments shown in FIG. 4 and FIG. 7, the reference AI execution environment list needs to be synchronized between the terminal device and the network device. In the embodiment shown in FIG. 8, the reference AI model list needs to be synchronized between the terminal device and the network device, to perform a subsequent evaluation procedure. Considering that software and hardware that constitute the reference AI execution environment and typical reference AI models develop constantly, and the reference AI execution environment list and the reference AI model list also need to be gradually updated. For example, a new version is released every year. After the version is updated, it still needs to be ensured that the reference AI execution environment list and the reference AI model list are synchronized between the terminal device and the network device.

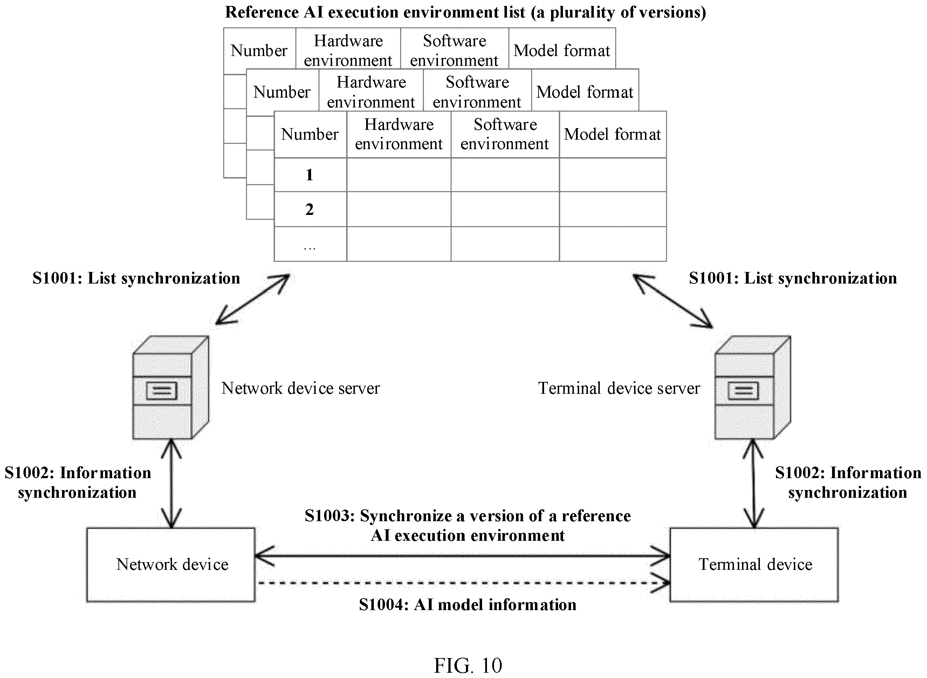

FIG. 10 shows a diagram of an architecture of a reference AI execution environment list and a maintenance and synchronization process of the reference AI execution environment list. As shown in FIG. 10, the architecture in this embodiment includes the reference AI execution environment list, servers corresponding to a terminal device and a network device respectively, and the terminal device and the network device.

The reference AI execution environment list may include a plurality of versions. For example, the reference AI execution environment list may be disclosed to the public. The reference AI execution environment list may be standardized by 3GPP, or may be maintained by a vendor (for example, a network device vendor, a network device AI model provider, and a network operator).

The network device server may be configured to synchronize the reference AI execution environment list, and the network device server may be further configured to store execution representations of M AI models in each reference AI execution environment, that is, the AI model information described in the foregoing embodiments. The terminal device server may be configured to synchronize the reference AI execution environment list, and the terminal device server may be further configured to store similarity information between the terminal device and the reference AI execution environment in the reference AI execution environment list. Optionally, the network device server and the terminal device server may not coexist. For example, the terminal device server may fail to be set and maintained. The similarity information between the terminal device and the reference AI execution environment in the reference AI execution environment list may be built in when the terminal device is delivered; or may be updated through software upgrade following an update of the reference AI execution environment list; or may fail to be updated or upgraded. The network device is responsible for backward compatibility of the reference AI execution environment list.

For example, when the network device server and the terminal device server coexist, a possible implementation procedure is shown in FIG. 10. The method may include but is not limited to the following steps.

S1001: The network device server performs list synchronization with the terminal device server.

In an implementation, the network device server and the terminal device server may separately obtain information about the reference AI execution environment list. Further, the network device server may obtain model complexity information of the M AI models through computing, and store the model complexity information in the network device server. The terminal device server may obtain similarity information between the terminal device and the reference AI execution environment through computing, and store the similarity information in the terminal device server. In another implementation, the information about the reference AI execution environment list may alternatively be obtained by a network device vendor and a terminal device vendor. In addition, the model complexity information (that is, the AI model information) of the M AI models and the similarity information (that is, AI capability information) between the terminal device and the reference AI execution environment are separately obtained offline based on the foregoing method, and then are separately stored in the network device server and the terminal device server.

S1002: The network device obtains the AI model information, that is, the model complexity information of the M AI models, from the network device server. The terminal device obtains the AI capability information from the terminal device server, that is, the similarity information between the terminal device and the reference AI execution environment.

S1003: The network device synchronizes a version of the reference AI execution environment list with the terminal device.

For example, after obtaining (or querying) a version that is of the reference AI execution environment and that is supported by the terminal device, the network device directly executes the version supported by the terminal device. Alternatively, after obtaining a version that is of the reference AI execution environment and that is supported by the terminal device, the network device updates the version from the network device server. It may be understood that the method is also applicable when no terminal device server exists.

Based on the aligned version of the reference AI execution environment, the network device and the terminal device may perform the procedure shown in FIG. 3 or FIG. 6.

For example, S1004: The network device sends the AI model information to the terminal device. For a specific process and a subsequent process, refer to related descriptions in the embodiments shown in FIG. 3 and FIG. 4. Details are not described herein again.

For another example, S 1004: The terminal device sends the AI capability information (not shown in FIG. 10) to the network device. For a specific process and a subsequent process, refer to related descriptions in the embodiments shown in FIG. 6 and FIG. 7. Details are not described herein again.

With reference to the embodiments shown in FIG. 3 and FIG. 4, the following describes an example of a procedure of maintaining and synchronizing a reference AI execution environment list.

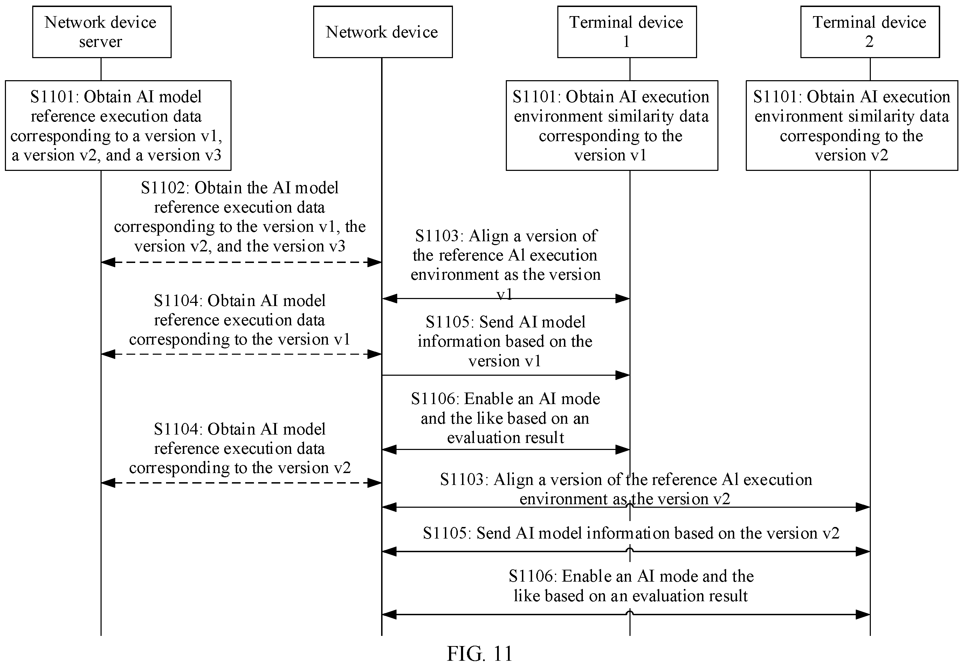

As shown in FIG. 11, two terminals (a terminal device 1 and a terminal device 2) are connected to a network device. Only the network device deploys and maintains a server, and the terminal devices do not deploy a server. The method may include, but is not limited to, the following steps.

S1101: The network device and the terminal device separately obtain AI model reference execution data and AI execution environment similarity data based on the reference AI execution environment list.

For example, the network device server obtains the AI model reference execution data. Considering that the reference AI execution environment list is continuously updated, and the network device server may obtain AI model reference execution data corresponding to a plurality of versions of the reference AI execution environment, for example, AI model reference execution data corresponding to a version v1, a version v2, and a version v3, that is, time and/or energy consumption of executing an AI model in each reference AI execution environment in reference AI execution environment lists of the version v1, the version v2, and the version v3 respectively. At least one reference AI execution environment is different between any two of the reference AI execution environment lists of the version v1, the version v2, and the version v3. In other words, any two reference AI execution environment lists are different. For a process in which the network device server obtains the AI model reference execution data, refer to related descriptions in step S301.

The terminal device 1 and the terminal device 2 may separately obtain the AI execution environment similarity data. Considering that a capability of the terminal device is limited, the terminal device may obtain AI execution environment similarity data corresponding to only one version. For example, the terminal device 1 obtains AI execution environment similarity data corresponding to the version v1, and the terminal device 2 obtains AI execution environment similarity data corresponding to the version v2. Optionally, the AI execution environment similarity data corresponding to the version v1 may be configured by the terminal device 1 before delivery, and the AI execution environment similarity data corresponding to the version v2 may be configured by the terminal device 2 before delivery. For a process in which the terminal device obtains the AI execution environment similarity data, refer to related descriptions in step S402.

S1102: The network device obtains the AI model reference execution data of at least one version or all versions from the network device server.

For example, there are three versions v1, v2, and v3 of the reference AI execution environment. The network device may obtain, from the network device server, the AI model reference execution data corresponding to the versions v1, v2, and v3. Optionally, in some other embodiments, the network device may obtain, when necessary, AI model reference execution data of a corresponding version from the network device server (refer to step S1104). In this case, step S1102 may not be performed.

S1103: The terminal device aligns the version of the reference AI execution environment list with the network device.

For example, the network device queries or obtains the version that is of the reference AI execution environment list and that is supported by the terminal device. As shown in FIG. 11, a version that is of the reference AI execution environment list and that is aligned between the network device and the terminal device 1 is the version v1, and a version that is of the reference AI execution environment list and that is aligned between the network device and the terminal device 2 is the version v2.

S1104: The network device obtains AI model reference execution data of the corresponding version from the network device server.

For example, as shown in FIG. 11, the network device may obtain, from the network device server, the AI model reference execution data corresponding to the version 1, to perform subsequent configuration on the terminal device 1. The network device may obtain, from the network device server, the AI model reference execution data corresponding to the version 2, to perform subsequent configuration on the terminal device 2.

It may be understood that if the network device obtains the AI model reference execution data of the corresponding version in step S1102, step S1104 may not be performed.

S1105: The network device sends AI model information of the corresponding version to the terminal device.

For example, the network device sends the AI model information to the terminal device 1 based on the version v1, and the network device sends the AI model information to the terminal device 2 based on the version v2. For example, the AI model information includes M groups of AI model complexity information corresponding to M AI models. Each of the M groups of AI model complexity information is time and/or energy consumption of executing one of the M AI models in each of the N reference AI execution environments. For specific implementation of sending, by the network device, the AI model information to the terminal device, refer to related descriptions in step S302 in the embodiment shown in FIG. 3. Details are not described herein again.

Further, the terminal device may evaluate, based on the AI model information sent by the network device and local AI execution environment similarity information, whether the AI model matches an AI capability of the terminal device, and determine a subsequent procedure based on an evaluation result. For example, in step S1106, the terminal device requests, based on the evaluation result, the network device to enable an AI model, or requests the network device to deliver at least one AI model. For a specific process and implementation of the evaluation of the terminal device, refer to related descriptions in the embodiment shown in FIG. 4. Details are not described herein again.

In the foregoing example, interaction between two terminal devices and a network device is used as an example for description. Optionally, in some other embodiments, there may be more than two terminal devices.

The foregoing example is described by using an example in which there is no terminal device server. It should be understood that, in some other embodiments, a network device server and a terminal device server may alternatively be deployed at the same time. This is not limited in this application.

It may be understood that, in FIG. 11, the embodiments shown in FIG. 3 and FIG. 4 are used as examples to describe a procedure of maintaining and synchronizing a reference AI execution environment list. In some other embodiments, maintenance and synchronization of a reference AI model list may alternatively be performed by referring to a design idea shown in FIG. 11.

In the foregoing method, when a version of the reference AI execution environment list is continuously updated, versions of terminals are inconsistent, and there is no version update tracking path, synchronization of the version of the reference AI execution environment between the terminal device and the network device is implemented, and accuracy of the evaluation result can be ensured.

According to the method provided in embodiments of this application, the network device may send the AI model information to the terminal device, so that the terminal device accurately and efficiently evaluates matching between the AI model and the AI capability of the terminal device. Alternatively, the terminal device may send the AI capability information of the terminal device to the network device, so that the network device accurately and efficiently evaluates matching between the AI model and the AI capability of the terminal device. In addition, in the method provided in embodiments of this application, the matching degree between the AI capability and the AI model can be evaluated between the terminal device and the network device without introducing an additional server device and an interaction protocol. In addition, according to the method provided in embodiments of this application, the versions of the reference AI execution environment list may be aligned between the terminal device and the network device, to improve accuracy of the matching result.

It may be understood that, to implement the functions in the foregoing embodiments, the network device and the terminal device include corresponding hardware structures and/or software modules for performing the functions. A person skilled in the art should be easily aware that, in this application, the units and method steps in the examples described with reference to embodiments disclosed in this application can be implemented by hardware or a combination of hardware and computer software. Whether a function is performed by using hardware or hardware driven by computer software depends on a particular application scenario and design constraint of the technical solutions.

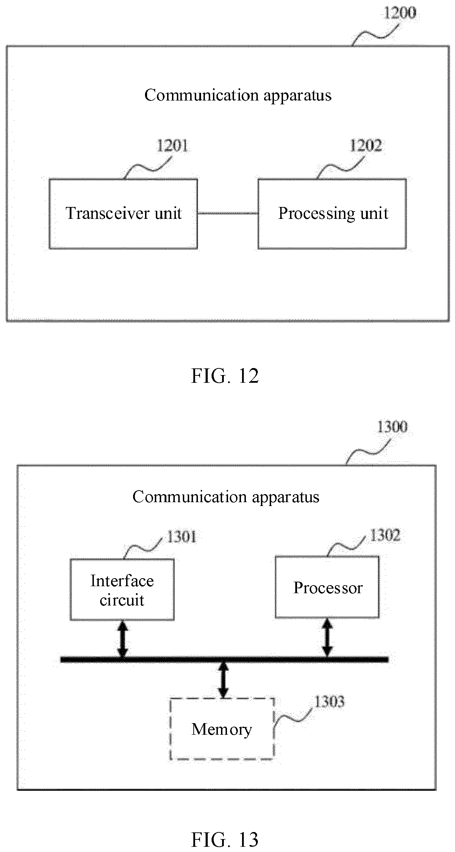

FIG. 12 and FIG. 13 are schematic diagrams of structures of possible communication apparatuses according to embodiments of this application. These communication apparatuses may be configured to implement functions of the terminal device or the network device in the foregoing method embodiments. Therefore, beneficial effects of the foregoing method embodiments can also be implemented. In embodiments of this application, the communication apparatus may be a terminal device or a network device, or may be a module (such as a chip) applied to a terminal device or a network device.

As shown in FIG. 12, the communication apparatus 1200 includes a transceiver unit 1201 and a processing unit 1202. The processing unit 1202 is configured to invoke the transceiver unit 1201 to receive information of another communication apparatus or send information to another communication apparatus. The transceiver unit 1201 may further include a receiving unit and a sending unit. The receiving unit is configured to receive information of another communication apparatus, and the sending unit is configured to send information to the another communication apparatus. The communication apparatus 1200 is configured to implement functions of the terminal device or the network device in the method embodiments shown in FIG. 3, FIG. 4, FIG. 6, and FIG. 7. The embodiment in FIG. 4 is based on the embodiment in FIG. 3, and the embodiment in FIG. 7 is based on the embodiment in FIG. 6. The following uses the embodiment in FIG. 3 and the embodiment in FIG. 6 as examples to describe operations separately performed by the transceiver unit 1201 and the processing unit 1202. For operations performed by the two units in other embodiments, refer to the method embodiments.

When the communication apparatus 1200 is configured to implement functions of the network device in the method embodiment shown in FIG. 3, the transceiver unit 1201 is configured to send AI model information to the terminal device, where the AI model information includes M groups of AI model complexity information corresponding to M AI models, each of the M groups of AI model complexity information is time and/or energy consumption of executing one of the M AI models in each of N reference AI execution environments, where M and N are positive integers. The processing unit 1202 is configured to obtain the AI model information. When the communication apparatus 1200 is configured to implement functions of the terminal device in the method embodiment shown in FIG. 3, the transceiver unit 1201 is configured to receive AI model information sent by the network device. The transceiver unit 1201 is further configured to send feedback information to the network device, where the feedback information requests the network device to enable an AI communication mode, or the feedback information includes an evaluation result of at least one of M AI models, or the feedback information requests to obtain at least one of the M AI models.

When the communication apparatus 1200 is configured to implement functions of the network device in the method embodiment shown in FIG. 6, the transceiver unit 1201 is configured to receive AI capability information sent by the terminal device, where the AI capability information includes a similarity between the terminal device and each of at least one reference AI execution environment. The transceiver unit 1201 is further configured to send configuration information to the terminal device based on the AI capability information, where the configuration information indicates the terminal device to enable an AI communication mode, or the configuration information indicates at least one AI model, or the configuration information indicates a configuration parameter of at least one AI model, or the configuration information indicates a method for obtaining at least one AI model. When the communication apparatus 1200 is configured to implement functions of the terminal device in the method embodiment shown in FIG. 6, the transceiver unit 1201 is configured to send AI capability information to the terminal device, where the AI capability information includes a similarity between the terminal device and each of at least one reference AI execution environment. The processing unit 1202 is configured to obtain the AI capability information.

For more detailed descriptions of the transceiver unit 1201 and the processing unit 1202, refer directly to related descriptions in the method embodiments shown in FIG. 3 and FIG. 6. Details are not described herein again.

Based on a same technical concept, as shown in FIG. 13, an embodiment of this application further provides a communication apparatus 1300. The communication apparatus 1300 includes an interface circuit 1301 and a processor 1302. The interface circuit 1301 and the processor 1302 are coupled to each other. It can be understood that the interface circuit 1301 may be a transceiver or an input/output interface. Optionally, the communication apparatus 1300 may further include a memory 1303, configured to store instructions executed by the processor 1302, store input data required for running instructions by the processor 1302, or store data generated after the processor 1302 runs instructions.

When the communication apparatus 1300 is configured to implement the methods shown in FIG. 3, FIG. 4, FIG. 6, and FIG. 7, the processor 1302 is configured to implement functions of the processing unit 1202, and the interface circuit 1301 is configured to implement functions of the transceiver unit 1201.

When the communication apparatus is a chip used in a terminal device, the chip in the terminal device implements functions of the terminal device in the foregoing method embodiments. The chip in the terminal device receives information from another module (for example, a radio frequency module or an antenna) in the terminal device, where the information is sent by a network device to the terminal device. Alternatively, the chip in the terminal device sends information to another module (for example, a radio frequency module or an antenna) in the terminal device, where the information is sent by the terminal device to a network device.

It may be understood that, the processor in embodiments of this application may be a central processing unit (central processing unit, CPU), or may be another general-purpose processor, a digital signal processor (digital signal processor, DSP), an application-specific integrated circuit (application-specific integrated circuit, ASIC), a field programmable gate array (field programmable gate array, FPGA) or another programmable logic device, a transistor logic device, a hardware component, or any combination thereof. The general-purpose processor may be a microprocessor or any conventional processor or the like.

Based on the foregoing embodiments, an embodiment of this application provides a communication system. The communication system may include the terminal device, the network device, and the like in the foregoing embodiments.

An embodiment of this application further provides a computer-readable storage medium. The computer-readable storage medium is configured to store a computer program. When the computer program is executed by a computer, the computer can implement the downlink scheduling method provided in the foregoing method embodiments.

An embodiment of this application further provides a computer program product. The computer program product is configured to store a computer program. When the computer program is executed by a computer, the computer may implement the downlink scheduling method provided in the foregoing method embodiments.

An embodiment of this application further provides a chip, including a processor. The processor is coupled to a memory, and is configured to invoke a program in the memory, so that the chip implements the downlink scheduling method provided in the foregoing method embodiments.

An embodiment of this application further provides a chip. The chip is coupled to a memory, and the chip is configured to implement the downlink scheduling method provided in the foregoing method embodiments.

The method steps in the embodiments of this application may be implemented in a hardware manner, or may be implemented in a manner of executing software instructions by the processor. The software instructions may include a corresponding software module. The software module may be stored in a random access memory (random access memory, RAM), a flash memory, a read-only memory (read-only memory, ROM), a programmable read-only memory (programmable ROM, PROM), an erasable programmable read-only memory (erasable PROM, EPROM), an electrically erasable programmable read-only memory (electrically EPROM, EEPROM), a register, a hard disk, a removable hard disk, a CD-ROM, or any other form of storage medium well-known in the art. For example, a storage medium is coupled to a processor, so that the processor can read information from the storage medium and write information into the storage medium. Certainly, the storage medium may be a component of the processor. The processor and the storage medium may be disposed in an ASIC. In addition, the ASIC may be located in a network device or a terminal device. Certainly, the processor and the storage medium may alternatively exist as discrete components in a network device or a terminal device.

All or some of the foregoing embodiments may be implemented by using software, hardware, firmware, or any combination thereof. When software is used to implement the embodiments, the embodiments may be implemented entirely or partially in a form of a computer program product. The computer program product includes one or more computer programs and instructions. When the computer programs or instructions are loaded and executed on a computer, all or some of the processes or functions in embodiments of this application are executed. The computer may be a general-purpose computer, a dedicated computer, a computer network, a network device, user equipment, or another programmable apparatus. The computer programs or instructions may be stored in a computer-readable storage medium, or may be transmitted from a computer-readable storage medium to another computer-readable storage medium. For example, the computer programs or instructions may be transmitted from a website, computer, first device, or data center to another website, computer, first device, or data center in a wired or wireless manner. The computer-readable storage medium may be any usable medium that can be accessed by a computer, or a data storage device, such as a first device or a data center, integrating one or more usable media. The usable medium may be a magnetic medium, for example, a floppy disk, a hard disk drive, or a magnetic tape, may be an optical medium, for example, a digital video disc (digital video disc, DVD), or may be a semiconductor medium, for example, a solid-state drive (solid-state drive, SSD).

Apparently, a person skilled in the art may make various modifications and variations to embodiments of this application without departing from the scope of embodiments of this application. This application is intended to cover these modifications and variations provided that the modifications and variations of embodiments of this application fall within the scope of protection defined by the following claims and their equivalent technologies.

**Claims**

1. An artificial intelligence AI communication method, comprising:

   receiving, by a first device, AI model information sent by a second device, wherein the AI model information comprises M groups of AI model complexity information corresponding to M AI models, each of the M groups of AI model complexity information is time and/or energy consumption of executing one of the M AI models in each of N reference AI execution environments, and M and N are positive integers; and
   sending, by the first device, feedback information to the second device.

2. The method according to claim 1, wherein the feedback information is used to request the second device to enable an AI communication mode; or

   the feedback information comprises an evaluation result of at least one of the M AI models; or

the feedback information is used to request to obtain at least one of the M AI models.

3. The method according to claim 1 or 2, wherein after the sending, by the first device, feedback information to the second device, the method further comprises: receiving, by the first device, configuration information sent by the second device, wherein the configuration information indicates the first device to enable the AI communication mode, or the configuration information indicates at least one of the M AI models, or the configuration information indicates a configuration parameter of at least one of the M AI models, or the configuration information indicates a method for obtaining at least one of the M AI models.

4. The method according to claim 2, wherein the at least one AI model comprises a first AI model, and an evaluation result of the first AI model comprises whether the first AI model matches the first device, or an evaluation result of the first AI model comprises expected time and/or energy consumption of executing of the first AI model by the first device.

5. The method according to any one of claims 1 to 4, wherein before the receiving, by a first device, AI model information sent by a second device, the method further comprises:
   sending, by the first device, request information to the second device, wherein the request information is used to request the second device to send the AI model information to the first device.

6. An artificial intelligence AI communication method, comprising:

   obtaining, by a second device, AI model information, wherein the AI model information comprises M groups of AI model complexity information corresponding to M AI models, each of the M groups of AI model complexity information is time and/or energy consumption of executing one of the M AI models in each of N reference AI execution environments, and M and N are positive integers; and
   sending, by the second device, the AI model information to a first device.

7. The method according to claim 6, wherein after the sending, by the second device, the AI model information to a first device, the method further comprises: receiving, by the second device, feedback information sent by the first device , wherein the feedback information is used to request the second device to enable an AI communication mode, or the feedback information comprises an evaluation result of at least one of the M AI models, or the feedback information is used to request to obtain at least one of the M AI models.

8. The method according to claim 7, wherein after the receiving, by the second device, feedback information sent by the first device, the method further comprises:

sending, by the second device, configuration information to the first device, wherein the configuration information indicates the first device to enable the AI communication mode, or the configuration information indicates at least one of the M AI models, or the configuration information indicates a configuration parameter of at least one of the M AI models, or the configuration information indicates a method for obtaining at least one of the M AI models.

9. The method according to claim 7, wherein the at least one AI model comprises a first AI model, and an evaluation result of the first AI model comprises whether the first AI model matches the first device, or an evaluation result of the first AI model comprises expected time and/or energy consumption of executing of the first AI model by the first device.

10. The method according to any one of claims 6 to 9, wherein before the sending, by the second device, the AI model information to a first device, the method further comprises:
receiving, by the second device, request information sent by the first device, wherein the request information is used to request the second device to send the AI model information to the first device.

11. The method according to any one of claims 6 to 9, wherein the sending, by the second device, the AI model information to a first device comprises:

periodically sending, by the second device, the AI model information to the first device; or
when the first device accesses a network in which the second device is located, sending, by the second device, the AI model information to the first device; or
when the first device establishes a communication connection to the second device, sending, by the second device, the AI model information to the first device; or
when structures or computing amounts of the M AI models change, sending, by the second device, the AI model information to the first device.

12. The method according to claim 2 or 7, wherein the feedback information is response information of the AI model information.

13. The method according to any one of claims 1 to 12, wherein the M AI models comprise the first AI model, the N reference AI execution environments comprise a first reference AI execution environment, time of executing the first AI model in the first reference AI execution environment is a first time value, a first time level, or a first time range, and energy consumption of executing the first AI model in the first reference AI execution environment is a first energy consumption value, a first energy consumption level, or a first energy consumption range.

14. The method according to any one of claims 1 to 13, wherein the M AI models comprise the first AI model, the M groups of AI model complexity information comprise a first group of AI model complexity information corresponding to the first AI model, and the first group of AI model complexity information comprises one or more of the following:

an amount of input data used when the first AI model is executed in each of the N reference AI execution environments;
numerical precision of the input data used when the first AI model is executed in each of the N reference AI execution environments;
numerical precision of a weight of the first AI model; and
operation precision of the first AI model obtained when the first AI model is executed in each of the N reference AI execution environments.

15. The method according to any one of claims 1 to 14, wherein the AI model information comprises an upper limit of time used by the first device to execute each of the M AI models.

16. A first device, comprising: one or more processors and one or more memories, wherein the one or more memories are coupled to the one or more processors, the one or more memories are configured to store computer program code, the computer program code comprises computer instructions, and when the one or more processors execute the computer instructions, the first device is enabled to perform the method according to any one of claims 1 to 5 or claims 12 to 15.

17. A second device, comprising one or more processors and one or more memories, wherein the one or more memories are coupled to the one or more processors, the one or more memories are configured to store computer program code, the computer program code comprises computer instructions, and when the one or more processors execute the computer instructions, the second device is enabled to perform the method according to any one of claims 6 to 15.

18. A computer-readable storage medium, wherein the computer-readable storage medium stores computer-executable instructions, and when the computer-executable instructions are invoked by a computer, the computer is enabled to perform the method according to any one of claims 1 to 15.

19. A computer program product comprising instructions, wherein when the computer program product runs on a computer, the computer is enabled to perform the method according to any one of claims 1 to 15.

20. A chip, wherein the chip is coupled to a memory, and is configured to read and execute program instructions stored in the memory, to implement the method according to any one of claims 1 to 15.

FIG. 1

(a)

(b)

FIG. 2

Terminal device

Network device

S301: Obtain AI model
information

S302: Send the AI model
information to the terminal device

S303: Send feedback information
to the network device

S304: Send configuration
information to the terminal device

FIG. 3

Terminal device

Network device

S401: Obtain reference AI execution environment information

S402: Obtain AI capability
information

S301: Obtain AI model
information

S302: Send the AI model
information to the terminal device

S403: Evaluate a matching
degree between an AI
capability and an AI model

S303: Send feedback information
to the network device

S304: Send configuration
information to the terminal device

FIG. 4

**Reference AI execution environment list**

| Number | Hardware environment | Software environment | Model format |
|--------|---------------------|---------------------|--------------|
| 1 |  |  |  |
| 2 |  |  |  |
| ... |  |  |  |

TO
FIG. 5B

FIG. 5A

**Reference AI model list**

| Number | Model structure parameter | Reference document |
|--------|---------------------------|--------------------|
| 1      |                           |                    |
| 2      |                           |                    |
| ...    |                           |                    |

CONT.
FROM
FIG. 5A

AI execution environment 2

t1

*t2*

...

Average → **Computing power value**

Normalize → **Efficiency vector**

FIG. 5B

| Terminal device | | Network device |
|---|---|---|

S601: Obtain AI capability information

S602: Send the AI capability information to the network device

S603: Send configuration information to the terminal device

FIG. 6

| Terminal device | | Network device |
|---|---|---|

S701: Obtain reference AI execution environment information

S601: Obtain AI capability information

S702: Obtain AI model information

S602: Send the AI capability information to the network device

S703: Evaluate a matching degree between an AI capability and an AI model

S603: Send configuration information to the terminal device

FIG. 7

```
┌─────────────────┐                          ┌─────────────────┐
│ Terminal device │                          │ Network device  │
└────────┬────────┘                          └────────┬────────┘
         │                                            │
┌────────┴────────────────────────────────────────────────────┐
│         S801: Obtain reference AI model information           │
└────────┬────────────────────────────────────────────┬────────┘
         │                                            │
┌────────┴────────────────┐              ┌────────────┴─────────────┐
│ S802: Obtain AI capability│            │ S301: Obtain AI model    │
│      information          │            │      information         │
└────────┬────────────────┘              └────────────┬─────────────┘
         │                                            │
         │      S302: Send the AI model               │
         │   information to the terminal device       │
         │◄───────────────────────────────────────────│
┌────────┴──────────────┐                             │
│ S803: Evaluate a matching│                          │
│ degree between an AI     │                          │
│ capability and an AI model│                         │
└────────┬──────────────┘                             │
         │                                            │
         │      S303: Send feedback information        │
         │          to the network device             │
         │───────────────────────────────────────────►│
         │                                            │
         │      S304: Send configuration              │
         │   information to the terminal device       │
         │◄╌╌╌╌╌╌╌╌╌╌╌╌╌╌╌╌╌╌╌╌╌╌╌╌╌╌╌╌╌╌╌╌╌╌╌╌╌╌╌╌╌╌│
         │                                            │
```

FIG. 8

**Reference AI model list**

| Number | Model structure parameter | Reference document |
|--------|---------------------------|--------------------|
| 1 | | |
| 2 | | |
| ... | | |

TO FIG. 9B

FIG. 9A

**Reference AI execution environment list**

| Number | Hardware environment | Software environment | Model format |
|--------|---------------------|---------------------|--------------|
| 1 | | | |
| 2 | | | |
| ... | | | |

CONT. FROM FIG. 9A

**AI model 2**

t1

t2

...

Average

Normalize

**Computing amount representation value**

**Efficiency vector**

FIG. 9B

**Reference AI execution environment list (a plurality of versions)**

| Number | Hardware environment | Software environment | Model format | | |
|---|---|---|---|---|---|
| Number | Hardware environment | Software environment | Model format | | |
| Number | Hardware environment | Software environment | Model format | | |
| 1 | | | | | |
| 2 | | | | | |
| ... | | | | | |

**S1001: List synchronization**

**S1001: List synchronization**

Network device server

Terminal device server

**S1002: Information synchronization**

**S1002: Information synchronization**

**S1003: Synchronize a version of a reference AI execution environment**

Network device

Terminal device

**S1004: AI model information**

FIG. 10

EP 4 422 252 A1

| Network device server | Network device | Terminal device 1 | Terminal device 2 |
|---|---|---|---|

S1101: Obtain AI model reference execution data corresponding to a version v1, a version v2, and a version v3

S1101: Obtain AI execution environment similarity data corresponding to the version v1

S1101: Obtain AI execution environment similarity data corresponding to the version v2

S1102: Obtain the AI model reference execution data corresponding to the version v1, the version v2, and the version v3

S1103: Align a version of the reference Al execution environment as the version v1

S1104: Obtain AI model reference execution data corresponding to the version v1

S1105: Send AI model information based on the version v1

S1106: Enable an AI mode and the like based on an evaluation result

S1104: Obtain AI model reference execution data corresponding to the version v2

S1103: Align a version of the reference Al execution environment as the version v2

S1105: Send AI model information based on the version v2

S1106: Enable an AI mode and the like based on an evaluation result

FIG. 11

1200

Communication apparatus

1201

Transceiver unit

1202

Processing unit

FIG. 12

1300

Communication apparatus

1301

Interface
circuit

1302

Processor

1303

Memory

FIG. 13

## INTERNATIONAL SEARCH REPORT

| International application No. |
| --- |
| **PCT/CN2022/131952** |

**A. CLASSIFICATION OF SUBJECT MATTER**

H04W 24/02(2009.01)i

According to International Patent Classification (IPC) or to both national classification and IPC

**B. FIELDS SEARCHED**

Minimum documentation searched (classification system followed by classification symbols)

H04W; G06F; G06N

Documentation searched other than minimum documentation to the extent that such documents are included in the fields searched

Electronic data base consulted during the international search (name of data base and, where practicable, search terms used)

CNPAT, CNKI, WPI, EPODOC: 人工智能, 神经网络, 模型, 时间, 时长, 能耗, 功耗, 耗电, 匹配, 适合, AI, Artificial intelligence, neural network, model, time, duration, consumption, power, match+

**C. DOCUMENTS CONSIDERED TO BE RELEVANT**

| Category* | Citation of document, with indication, where appropriate, of the relevant passages | Relevant to claim No. |
| --- | --- | --- |
| Y | US 2021174137 A1 (SAMSUNG ELECTRONICS CO., LTD.) 10 June 2021 (2021-06-10) description, paragraphs 0008-0013 and 0042-0233 | 1-20 |
| Y | WO 2020042112 A1 (HUAWEI TECHNOLOGIES CO., LTD.) 05 March 2020 (2020-03-05) description, page 5, last paragraph to page 23, last paragraph | 1-20 |
| A | CN 111260053 A (ALIPAY (HANGZHOU) INFORMATION TECHNOLOGY CO., LTD.) 09 June 2020 (2020-06-09) entire document | 1-20 |
| A | CN 111949972 A (HUAKONG TSINGJIAO INFORMATION TECHNOLOGY (BEIJING) CO., LTD.) 17 November 2020 (2020-11-17) entire document | 1-20 |
| A | US 2010169154 A1 (NOKIA CORPORATION) 01 July 2010 (2010-07-01) entire document | 1-20 |

☐ Further documents are listed in the continuation of Box C.  ☑ See patent family annex.

| * Special categories of cited documents: | "T" later document published after the international filing date or priority date and not in conflict with the application but cited to understand the principle or theory underlying the invention |
| --- | --- |
| "A" document defining the general state of the art which is not considered to be of particular relevance | |
| "E" earlier application or patent but published on or after the international filing date | "X" document of particular relevance; the claimed invention cannot be considered novel or cannot be considered to involve an inventive step when the document is taken alone |
| "L" document which may throw doubts on priority claim(s) or which is cited to establish the publication date of another citation or other special reason (as specified) | "Y" document of particular relevance; the claimed invention cannot be considered to involve an inventive step when the document is combined with one or more other such documents, such combination being obvious to a person skilled in the art |
| "O" document referring to an oral disclosure, use, exhibition or other means | |
| "P" document published prior to the international filing date but later than the priority date claimed | "&" document member of the same patent family |

| Date of the actual completion of the international search | Date of mailing of the international search report |
| --- | --- |
| **13 January 2023** | **19 January 2023** |

| Name and mailing address of the ISA/CN | Authorized officer |
| --- | --- |
| **China National Intellectual Property Administration (ISA/CN)** **No. 6, Xitucheng Road, Jimenqiao, Haidian District, Beijing 100088, China** | |
| Facsimile No. **(86-10)62019451** | Telephone No. |

Form PCT/ISA/210 (second sheet) (January 2015)

**INTERNATIONAL SEARCH REPORT**
Information on patent family members

International application No.

**PCT/CN2022/131952**

| Patent document cited in search report | | | Publication date (day/month/year) | Patent family member(s) | | | Publication date (day/month/year) |
|---|---|---|---|---|---|---|---|
| US | 2021174137 | A1 | 10 June 2021 | EP | 4004825 | A1 | 01 June 2022 |
| | | | | WO | 2021118173 | A1 | 17 June 2021 |
| | | | | CN | 114787825 | A | 22 July 2022 |
| | | | | KR | 20210072687 | A | 17 June 2021 |
| WO | 2020042112 | A1 | 05 March 2020 | CN | 112204532 | A | 08 January 2021 |
| CN | 111260053 | A | 09 June 2020 | WO | 2021143466 | A1 | 22 July 2021 |
| CN | 111949972 | A | 17 November 2020 | None | | | |
| US | 2010169154 | A1 | 01 July 2010 | None | | | |

Form PCT/ISA/210 (patent family annex) (January 2015)

**REFERENCES CITED IN THE DESCRIPTION**

**Patent documents cited in the description**

- CN 202111357588
- CN 202111464756